# EUROPEAN PATENT APPLICATION

(11) **EP 4 848 163 A1**
(43) Date of publication of application: **02.12.2026**
(21) Application number: 25761547.6
(22) Date of filing: 10.02.2025
(51) Int. Cl.: G06N 99/00

(54) **PROBLEM SOLVING DEVICE, PROBLEM SOLVING METHOD, AND PROGRAM**

(30) Priority: 01.03.2024 JP 2024031388; 25.09.2024 JP 2024165798
(71) Applicant: KABUSHIKI KAISHA TOSHIBA, Kawasaki-shi, Kanagawa 212-0013 (JP)
(72) Inventor: SUZUKI, Masaru, Kawasaki-shi, Kanagawa 212-0013 (JP)
(74) Representative: Marks & Clerk LLP
(86) International application number: PCT/JP2025/004264
(87) International publication number: WO 2025/182538

(57) **Abstract**

A subproblem structure is extracted from a network optimization problem, and an accurate solution is calculated in a short time. A problem solving apparatus according to an embodiment solves a network optimization problem. The problem solving apparatus includes a processing unit that repeatedly performs a first process, a second process, and a third process. In the first process, the processing unit identifies each of the plurality of decision variables included in the network optimization problem as a decision variable having a large influence and a decision variable having a small influence. In the second process, the processing unit replaces a decision variable having a small influence with an estimated value, and performs sampling and statistical processing on the decision variable having a large influence. In the third process, the processing unit replaces the decision variable having the strong statistical bias with a value based on the statistical bias on the basis of the result of the sampling and the statistical processing.

## Description

### Technical Field

Embodiments of the present invention relate to a problem solving apparatus, a problem solving method, and a program.

### Background Art

In an optimization problem in a real world, a master problem often includes a subproblem. In many cases, it is possible to optimize a master problem that requires an enormous amount of calculation time when the whole is optimized at a time, by using a structure of the subproblem with the realistic calculation time. However, there are fact patterns found frequently where the finding of the structure of the subproblem from the master problem is difficult, and the master problem is solved without using the structure of the subproblem, resulting in that an appropriate solution cannot be obtained. As such, a method for appropriately finding the structure of the subproblem from the master problem is necessary.

As a master problem including the structure of the subproblem, for example, there is a problem of searching for a route that minimizes the time taken for the vehicle to travel between two specific points. For example, when searching for a route from a first point in a first city to a second point in a second city, if searching is performed in consideration of all roads from the first point to the second point, enormous calculation time is required.

As a method for solving such a problem, a first algorithm considering a subproblem structure of a road network is thinkable.

First, the first algorithm searches for a route that minimizes the time taken for the vehicle to travel from the first point to several freeway entrances around the first point. Second, the first algorithm searches for a route that minimizes the time taken for the vehicle to travel from several freeway entrances around the first point to several freeway exits around the second point. Third, the first algorithm searches for a route that minimizes the time taken for the vehicle to travel from several freeway exits around the second point to the second point. Fourth, the first algorithm searches for a combination that minimizes the time for traveling by the vehicle for several freeway entrances around the first point and several freeway exits around the second point. Such a first algorithm can search for a master problem of searching for a route that minimizes the time taken for the vehicle to travel between two specific points in a realistic calculation time.

In addition, a method of shortening the solving time of a linear programming problem having a large problem size by a following second algorithm is known.

First, the second algorithm determines the division granularity of the linear programming problem based on the allowable time for solving the linear programming problem as the solving target. Second, the second algorithm creates, based on the determined division granularity, an objective function for each subproblem divided from the linear programming problem from the objective function for the linear programming problem. Third, the second algorithm creates a constraint expression for each subproblem based on the constraint expression group of the linear programming problem and past allocation result data for the variables included in the linear programming problem. Fourth, the second algorithm calculates the solution of the linear programming problem by sequentially solving each subproblem based on the objective function and the constraint expression created for each subproblem.

Such a second algorithm is assumed to solve a date based nurse scheduling problem (NSP). The NSP is a problem of assigning the required number of nurses with the required skill level to a work time zone (shift) in which a two-shift system or a three-shift system is assumed, and creating a schedule that satisfies a work load and a leave preference of the nurses.

Typical constraint conditions in the NSP are classified into the following three types.

The first type is a constraint condition for allocating the required number of nurses with the required skill level to each shift. The second type is a constraint condition for calculating a work load in a range of the predetermined number of consecutive shifts or a range of the predetermined number of days for each nurse and keeping the calculated work load within the predetermined range. The third type is a constraint condition for assigning a leave at a specific date and time for each of the nurses.

For example, the NSP for one month includes the subproblems of the first week, the second week, the third week, and the fourth week. When the coupling between two subproblems is evaluated by the number of constraint conditions across the two subproblems, the coupling is strong in the combination of the first week and the second week, the second week and the third week, and the third week and the fourth week, and the coupling becomes weaker as the time is further away. In addition, in the NSP for one month, there is a shift that is out of an optimization target before the first week. In the NSP for one month, a shift that is out of the optimization target also functions as a constraint condition.

The second algorithm uses the structure of such a subproblem and solves the NSP as follows. First, the second algorithm optimizes the subproblem for the first week. Second, the second algorithm optimizes the subproblem for the second week by fixing variables belonging to the first week. Third, the second algorithm optimizes the subproblem for the third week by fixing variables belonging to the first and second weeks. Third, the second algorithm optimizes the subproblem for the fourth week by fixing variables belonging to the first, second, and third weeks. As a result, the second algorithm can shorten the calculation time of the NSP while maintaining the accuracy of the solution.

In addition, there is also known a method of shortening the solving time of a linear programming problem having a large problem size by a following third algorithm.

The third algorithm solves a workflow scheduling problem (WSP) as follows. First, the third algorithm extracts m jobs from the upstream of the dependency relationship among jobs for which an execution time frame is undetermined. Second, the third algorithm extracts n time frames from the earliest time among the time frames in which the resource is sufficiently left. Third, the third algorithm optimizes subproblems of m jobs and n time frames. Fourth, the third algorithm determines a time frame in which the optimized job is to be executed, reduces the resource amount for the time frame, and returns to the first processing.

A normal job shop scheduling problem (JSP) includes, for example, a plurality of sequences that must be processed in the order of job A → job B → job C. In a normal JSP, a resource amount and a processing time necessary for each job are set. Then, the JSP optimizes the execution order of the jobs within a range in which the resource amount required for the jobs that can be executed at the same time does not exceed the resource amount upper limit. The third algorithm shortens the calculation time while maintaining the accuracy of the solution by a method of repeating solving a subproblem extracted in m jobs and n time frames from the front of the sequence in such a JSP.

The workflow scheduling problem (WSP) is different from the JSP in that dependency relationships between jobs are directed acyclic graphs. The third algorithm solves such a WSP by solving the subproblem extracted in m jobs and n time frames from the upstream of the dependency relationship, thereby shortening the calculation time while maintaining the accuracy of the solution, although it becomes more complicated than the case of solving the JSP with a simple sequence.

As described above, the second algorithm is directed to a problem in which the assumed problem class is NSP and there is a natural total order of date and time. As such, the second algorithm can shorten the calculation time while maintaining the accuracy of the solution by sequentially extracting the subproblems from the front with respect to the total order by the date and time.

On the other hand, the third algorithm is directed to a problem in which the assumed problem class is WSP and there is a natural partial order of dependency relationship. As such, the third algorithm obtains the total order by topologically sorting the partial order according to the dependency relationship. Then, the third algorithm shortens the calculation time while maintaining the accuracy of the solution by extracting the subproblems in order from the front for the total order of the topological sorting result.

As described above, when there is a natural total order or partial order in the problem class, it is effective to use a heuristic solution utilizing the total order or the partial order as in the second algorithm and the third algorithm.

However, the second algorithm and the third algorithm have a problem that, although there is no natural total order or partial order, it is difficult to obtain a highly accurate solution for a problem class including a structure of a subproblem. In addition, the second algorithm targets only a linear programming problem, and has a problem that a quadratic programming problem and a nonlinear programming problem cannot be solved.

Here, as one of optimization problems in the real world, there is a medical product combinatorial problem. The effect of medications is not a simple sum of therapeutic effects but medications are generally prescribed in consideration of a synergistic effect between the medications. In addition, there are combinations of medications that are toxic when used with another medication, and are called contraindicated combinations and concomitant-use precautions. In Japan, doctors and pharmacists double check such that contraindicated combinations and concomitant-use precautions do not take place when prescribing medications.

The medication combinatorial problem in consideration of the synergistic effect of two types of medications can be summarized as an optimization problem as follows.
(1) Among combinations of allowing each of candidate medications only to be prescribed,
(2) under the constraint conditions that contraindicated combinations and concomitant-use precautions do not take place,
(3) a problem of finding a combination with the highest therapeutic effect also in consideration of the secondary synergistic effect.

Such a medication combinatorial problem is called a quadratic weighted maximum independent set problem in terms of a mathematical optimization problem.

Such a medication combinatorial problem can be treated as a network optimization problem by defining each of a plurality of medications as a node, setting a therapeutic effect of the corresponding medication as a weight of the node, and assigning a coefficient of the synergistic effect, and a contraindicated combination and concomitant-use precaution as weights of edges.

However, there are an enormous number of types of modern medications. For example, the medication combinatorial problem may have millions of binary variables. It is difficult for a normal quadratic unconstrained binary optimization (QUBO) solver to solve an optimization problem including such an enormous number of binary variables as it is. In addition, since the medication combinatorial problem has no structure of a clear subproblem, and there is no natural total order or partial order, it is also difficult to find a solution by the first to third algorithms described above.

### Citation List

### Patent Literature

Patent Literature 1: JP 2023-035664 A
Patent Literature 2: JP 2021-043667 A
Patent Literature 3: JP 2021-043589 A

### Non Patent Literature

Non Patent Literature 1: Atsuko IKEGAMI, "Nurse Scheduling - Site Research, Modeling and Algorithms -", The Institute of Statistical Mathematics, Proceedings of the Institute of Statistical Mathematics (2005), Vol. 53, No. 2, pp. 231-259, May 13, 2005
Non Patent Literature 2: Pakhomchik, A.I., Yudin, S., Perelshtein, M.R., Alekseyenko, A., & Yarkoni, S., "Solving workflow scheduling problems with QUBO modeling" May 10, 2022, Internet <URL, https://arXiv preprint arXiv: 2205.04844>
Non Patent Literature 3: Hayato Goto, Kosuke Tatsumura and Alexander R. Dixon, "Combinatorial optimization by simulating adiabatic bifurcations in nonlinear Hamiltonian systems," Science Advances 5, eaav2372, 2019
Non Patent Literature 4: Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021

### Summary of Invention

### Technical Problem

An object of the present invention is to provide a problem solving apparatus, a problem solving method, and a program capable of accurately calculating a solution of an optimization problem including an enormous number of variables in a short time.

### Solution to Problem

A problem solving apparatus according to an embodiment includes a problem acquiring unit, a dependent problem, an approximate problem generating unit, and a table update unit. The problem acquiring unit acquires a master problem of minimizing an objective function including a plurality of decision variables under a constraint condition or without a constraint condition. The dependent problem generating unit generates a dependent problem including, as a plurality of dependent decision variables, two or more decision variables that are not registered as determined in a decision variable replacement table among the plurality of decision variables, in response to execution of new registration processing of newly registering a value of any decision variable among the plurality of decision variables in the decision variable replacement table in which a value of a determined decision variable among the plurality of decision variables is registered. The approximate problem generating unit generates, every time the dependent problem is generated, an approximate problem including a part or all of two or more dependent decision variables as two or more residual decision variables in descending order from a larger influence among the plurality of dependent decision variables. The table update unit executes the new registration processing of determining a value by performing statistical processing for each of the two or more residual decision variables based on a plurality of solutions to the approximate problem, and newly registering, in the decision variable replacement table, the value determined by performing the statistical processing for each of one or more decision variables corresponding to a part or all of the two or more residual decision variables. The solution output unit outputs a solution to the master problem based on all values of the plurality of decision variables registered in the decision variable replacement table when all values of the plurality of decision variables included in the master problem are registered in the decision variable replacement table.

### Brief Description of Drawings

FIG. 1A is a diagram illustrating a functional configuration of a problem solving apparatus according to a first embodiment.
FIG. 1B is a diagram illustrating a functional configuration in a case where a central processing device executes processing according to a program.
FIG. 2 is a diagram illustrating information stored in a long-term storage device.
FIG. 3 is a diagram illustrating information stored in a temporary storage device.
FIG. 4 is a functional block diagram schematically illustrating a processing flow of the problem solving apparatus.
FIG. 5 is a flowchart illustrating a processing flow of a sampling schema method program.
FIG. 6 is a flowchart illustrating processing from S111 to S115 of a derivation subprogram for a dependent problem instance.
FIG. 7 is a flowchart illustrating processing from S116 to S129 of the derivation subprogram for a dependent problem instance.
FIG. 8 is a flowchart illustrating a processing flow of a derivation solving subprogram for a relaxed problem instance.
FIG. 9 is a flowchart illustrating a processing flow of a derivation subprogram for an approximate problem instance.
FIG. 10 is a flowchart illustrating a processing flow from S411 to S418 of an entry addition subprogram for a decision variable replacement table.
FIG. 11 is a flowchart illustrating a processing flow from S419 to S425 of the entry addition subprogram for a decision variable replacement table.
FIG. 12 is a flowchart illustrating a processing flow from S426 to S442 of the entry addition subprogram for a decision variable replacement table.
FIG. 13 is a flowchart illustrating a processing flow of a derivation subprogram for a master problem solution instance.
FIG. 14 is a diagram illustrating a functional configuration of a problem solving apparatus according to a second embodiment.
FIG. 15 is a diagram illustrating a functional configuration of a problem solving system according to a third embodiment.

### Description of Embodiments

### (First Embodiment)

First, a problem solving apparatus 1 according to a first embodiment will be described.

The problem solving apparatus 1 calculates a solution to a network optimization problem. The problem solving apparatus 1 repeats processing of dividing each of the plurality of decision variables included in the network optimization problem into a decision variable having a large influence and a decision variable having a small influence, replacing the decision variable having the small influence with an estimated value, performing sampling and statistical processing on the decision variable having the large influence, and replacing the decision variable having a strong statistical bias with a value based on the statistical bias. As a result, the problem solving apparatus 1 calculates an approximate solution to the network optimization problem. Even when the network represented by the network optimization problem does not have a natural total order or partial order and does not have a cluster structure, the problem solving apparatus 1 can extract a subproblem structure from the network optimization problem and calculate an accurate solution in a short time.

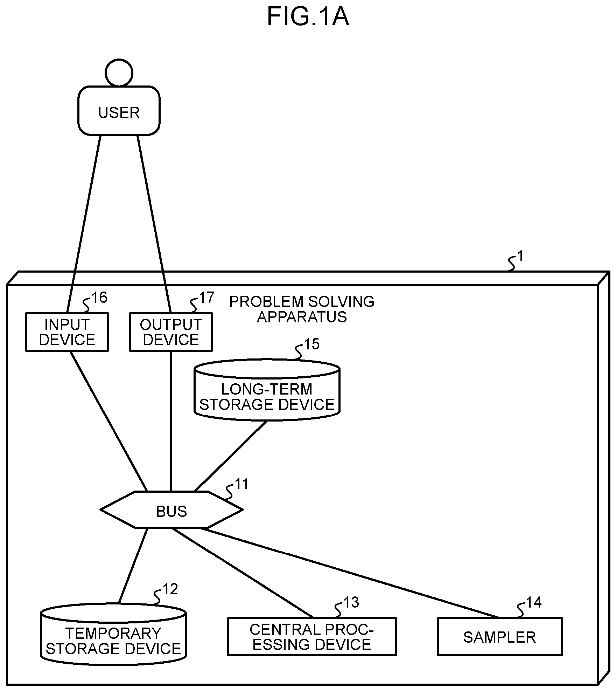

FIG. 1A is a diagram illustrating a functional configuration of the problem solving apparatus 1 according to the first embodiment.

The problem solving apparatus 1 includes a bus 11, a temporary storage device 12, a central processing device 13, a sampler 14, a long-term storage device 15, an input device 16, and an output device 17. The temporary storage device 12, the central processing device 13, the sampler 14, the long-term storage device 15, the input device 16, and the output device 17 are connected to each other via the bus 11.

The temporary storage device 12 and the long-term storage device 15 are storage devices that store information. The central processing device 13 is an information processing device that executes processing according to a program by a processor such as a central processing unit (CPU). The input device 16 acquires information from a user or another device. The output device 17 outputs information to the user or another device.

The sampler 14 performs a solving process for solving the provided problem. In the present embodiment, sampling refers to solving and acquiring a solution to a problem using the sampler 14.

The sampler 14 may be realized by a CPU, a graphics processing unit (GPU), or a reconfigurable semiconductor device such as a field-programmable gate array (FPGA). In addition, the sampler 14 may be realized by an accelerator, an application specific integrated circuit (ASIC), or an electronic circuit including these circuits. Furthermore, the sampler 14 may be realized by an information processing device such as a computer, a computer system configured by a plurality of computers or servers communicating with each other via a network, a PC cluster in which a plurality of computers execute information processing in cooperation, or the like.

The sampler 14 obtains an approximate solution by solving a problem that minimizes an objective function by a heuristic solution algorithm. As a result, the sampler 14 can output a plurality of solutions that minimize the provided objective function. Note that the sampler 14 outputs, among a large number of solutions obtained by solving a problem by a heuristic solution algorithm, a plurality of solutions in which, for example, a value obtained by substituting a solution into an objective function is smaller than a predetermined value, or, for example, a predetermined number of solutions in ascending order of a value obtained by substituting a solution into an objective function.

The sampler 14 may be any device as long as it can obtain a plurality of solutions for minimizing a function. For example, the sampler 14 may be a device using a quantum annealing technology or a device using a pseudo quantum annealing technology.

In the present embodiment, the sampler 14 solves the problem using a simulated bifurcation algorithm. The simulated bifurcation algorithm is disclosed in, for example, Non-Patent Literature 3, Non-Patent Literature 4, Patent Literature 2, and Patent Literature 3. The simulated bifurcation algorithm is also referred to as a quantum-inspired algorithm because it has been discovered with an idea from a quantum mechanical optimization method based on the quantum adiabatic theorem. The simulated bifurcation algorithm can solve a combinatorial optimization problem, that is, a QUBO problem, in which a cost function is a quadratic function of a plurality of binary decision variables. The simulated bifurcation algorithm can also solve a combinatorial optimization problem, that is, a higher order binary optimization (HUBO) problem, in which a cost function is a third-degree-or-higher function of a plurality of binary decision variables. A simulated bifurcation algorithm for solving the HUBO problem is disclosed in Patent Literature 2, for example. Furthermore, the simulated bifurcation algorithm can also solve a combinatorial optimization problem including continuous-valued decision variables in a part or all of a plurality of decision variables. A simulated bifurcation algorithm that solves a combinatorial optimization problem including continuous-valued decision variables in a part or all of a plurality of decision variables is disclosed in, for example, Patent Literature 3.

Furthermore, in the present embodiment, the sampler 14 includes a plurality of engines each independently executing the simulated bifurcation algorithm. The sampler 14 outputs a plurality of solutions to one provided objective function by executing a plurality of engines in parallel. The sampler 14 may output a plurality of solutions by one engine repeatedly executing the simulated bifurcation algorithm a plurality of times.

The simulated bifurcation algorithm uses a plurality of position variables and a plurality of momentum variables corresponding one-to-one to a plurality of decision variables included in a provided objective function. The simulated bifurcation algorithm sets an initial value group for a plurality of position variables or a plurality of momentum variables at the start of execution. The simulated bifurcation algorithm is more likely to output different approximate solutions when initial value groups set for a plurality of position variables and a plurality of momentum variables are different. In the present embodiment, the sampler 14 outputs a plurality of solutions by setting a plurality of initial value groups different from each other for a plurality of position variables or a plurality of momentum variables used by each of a plurality of engines.

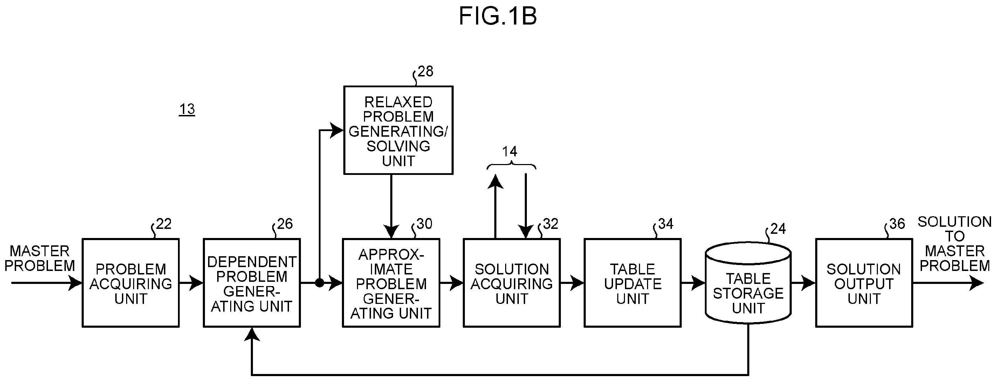

FIG. 1B is a diagram illustrating a functional configuration in a case where the central processing device 13 executes processing according to a program.

The central processing device 13 includes a problem acquiring unit 22, a table storage unit 24, a dependent problem generating unit 26, a relaxed problem generating/solving unit 28, an approximate problem generating unit 30, a solution acquiring unit 32, a table update unit 34, and a solution output unit 36.

The problem acquiring unit 22 acquires the master problem that minimizes the objective function including the plurality of decision variables under the constraint condition or without the constraint condition. Each of the plurality of decision variables is a binary variable representing a first value or a second value. The objective function is a quadratic function. The constraint condition is expressed by one or more linear constraint expressions including any decision variable among the plurality of decision variables.

The table storage unit 24 is realized by the temporary storage device 12 when the central processing device 13 executes a program. The table storage unit 24 stores a decision variable replacement table.

In the decision variable replacement table, values of determined decision variables among the plurality of decision variables are registered. In the present embodiment, entries are registered in the decision variable replacement table. The entry includes a serial number, a replacement-source decision variable, and a replacement value.

The serial number represents the order of the entries. The serial number does not overlap with other entries.

The replacement-source decision variable identifies any of the plurality of decision variables. The replacement-source decision variable does not overlap with other entries.

The replacement value is the value of determined decision variable for the replacement-source decision variable. In the present embodiment, the replacement value represents a first value, a second value, a previously determined decision variable multiplied by the non-inverted sign without inverting the sign, or a previously determined decision variable multiplied by the inverted sign that inverts the sign. The previously determined decision variable represents a replacement-source decision variable included in the entry having a later serial number.

That is, in the present embodiment, in a case where the replacement value has a correlation with the value of the previously determined decision variable, the replacement value is represented by a value obtained by multiplying the value of the previously determined decision variable by the non-inverted sign or a value obtained by multiplying the value of the previously determined decision variable by the inverted sign.

The decision variable replacement table is an empty state including no entry before the solving process of the master problem. In the decision variable replacement table, entries are sequentially added in ascending order of the serial number. The decision variable replacement table includes entries corresponding to the number of the plurality of decision variables when the solving process for the master problem is completed.

In the decision variable replacement table, the decision variable having a large influence on the master problem is included as the replacement-source decision variable in the entry having an earlier serial number than the decision variable having a small influence on the master problem. Therefore, in the decision variable replacement table, the value of the decision variable having a large influence is registered earlier than the value of the decision variable having a small influence.

The dependent problem generating unit 26 generates the dependent problem in response to execution of the new registration processing of newly registering the value of any of the plurality of decision variables in the decision variable replacement table.

The dependent problem includes, as the plurality of dependent decision variables, two or more decision variables that are not registered as determined in the decision variable replacement table among the plurality of decision variables in the master problem. Further, the dependent problem is a problem in which the decision variable registered as determined in the decision variable replacement table among the plurality of decision variables in the master problem is replaced with the value determined.

When the value of any decision variable among the plurality of decision variables is not registered in the decision variable replacement table, the dependent problem generating unit 26 generates the dependent problem in response to acquisition of the master problem by the problem acquiring unit 22.

The relaxed problem generating/solving unit 28 generates a relaxed problem every time the dependent problem is generated by the dependent problem generating unit 26.

When generating a relaxed problem, the relaxed problem generating/solving unit 28 generates a plurality of continuous decision variables corresponding one-to-one to a plurality of dependent decision variables included in the dependent problem. Each of the plurality of continuous decision variables is a continuous variable. Then, the relaxed problem generating/solving unit 28 generates a relaxed problem by replacing each of the plurality of dependent decision variables included in the dependent problem with a corresponding continuous decision variable among the plurality of continuous decision variables and converting the objective function of the dependent problem into a continuous convex quadratic function based on a predetermined rule.

Further, the relaxed problem generating/solving unit 28 obtains the solution of the generated relaxed problem. Since the objective function of the relaxed problem is a continuous convex quadratic function, the relaxed problem generating/solving unit 28 can calculate a solution to the relaxed problem by simple calculation.

The approximate problem generating unit 30 generates an approximate problem every time the dependent problem is generated by the dependent problem generating unit 26.

The approximate problem includes, as two or more residual decision variables, a part or all of two or more dependent decision variables in descending order from a larger influence among the plurality of dependent decision variables included in the dependent problem. The approximate problem is a problem in which the dependent decision variable excluding a part or all of two or more dependent decision variables in descending order from a larger influence among the plurality of dependent decision variables in the dependent problem is replaced with the estimated value.

For example, the approximate problem generating unit 30 calculates a weighting coefficient for each of the plurality of dependent decision variables. The weighting coefficient is an absolute value of a value obtained by accumulating weight values set to a term including a corresponding decision variable among a plurality of decision variables in the master problem.

Subsequently, the approximate problem generating unit 30 selects dependent decision variables the number of which corresponds to the number of preset sampling-time variable upper limit values from the top of the weighting coefficient among the plurality of dependent decision variables. Then, the approximate problem generating unit 30 generates an approximate problem that includes dependent decision variables corresponding to the number of selected sampling-time variable upper limit values among the plurality of dependent decision variables as two or more residual decision variables. The approximate problem is a problem in which an unselected dependent decision variable among a plurality of dependent decision variables in the dependent problem is replaced with an estimated value. In addition, the estimated value is a value of a continuous decision variable corresponding to an unselected dependent decision variable among values of a plurality of continuous decision variables included in the solution of the relaxed problem.

When the number of the plurality of dependent decision variables included in the dependent problem is smaller than the sampling-time variable upper limit value, the approximate problem generating unit 30 generates an approximate problem including all of the plurality of dependent decision variables included in the dependent problem as two or more residual decision variables.

Every time the approximate problem is generated by the approximate problem generating unit 30, the solution acquiring unit 32 provides an approximate problem to the sampler 14 and acquires a plurality of solutions to the approximate problem from the sampler 14. Note that the sampler 14 can solve the linearly constrained quadratic minimization problem to generate an approximate solution to the linearly constrained quadratic minimization problem. The sampler 14 generates a plurality of solutions to the approximate problem by performing a solving process for the approximate problem in parallel or sequentially a plurality of times.

The table update unit 34 acquires a plurality of solutions to the approximate problem from the solution acquiring unit 32. Every time the table update unit 34 acquires a plurality of solutions to the approximate problem from the solution acquiring unit 32, the table update unit 34 determines a value by performing statistical processing for each of the two or more residual decision variables based on the plurality of solutions to the approximate problem. Then, the table update unit 34 executes new registration processing of newly registering a value determined by performing statistical processing for each of one or more decision variables corresponding to a part or all of the two or more residual decision variables in the decision variable replacement table.

For example, the table update unit 34 calculates an average value for each of the two or more residual decision variables on the basis of a plurality of solutions to the approximate problem, and calculates an evaluation value corresponding to the calculated average value. At the same time, the table update unit 34 calculates a correlation value representing a correlation for each of the plurality of variable sets included in the two or more residual decision variables based on the plurality of solutions to the approximate problem, and calculates an evaluation value corresponding to the calculated correlation value.

Each of the plurality of variable sets is a set of two different residual decision variables. In addition, the evaluation value is a value for determining the accuracy of the average value and the accuracy of the correlation value on the same basis.

Subsequently, the table update unit 34 stores a plurality of elements in a priority queue. Each of the plurality of elements includes any one of the two or more residual decision variables or any one of the plurality of variable sets together with the evaluation value. The priority queue is a buffer that temporarily stores a plurality of elements. The priority queue is capable of extracting elements one by one in descending order of evaluation value among a plurality of stored elements.

Subsequently, the table update unit 34 newly registers an entry corresponding to one head element having the largest evaluation value among the plurality of elements stored in the priority queue in the decision variable replacement table on condition of not overlapping with the already registered entry. The newly registered entry corresponding to the head element includes a serial number representing an entry subsequent to the entry already registered in the decision variable replacement table.

Subsequently, the table update unit 34 deletes the head element from the priority queue. Then, the table update unit 34 repeats the process of newly registering the entry corresponding to the head element in the priority queue in the decision variable replacement table on condition of not overlapping with the already registered entry and the process of deleting the head element from the priority queue until a predetermined end condition is reached. Note that the end condition is, for example, that the priority queue becomes empty, that the number of newly registered entries becomes larger than a predetermined variable replacement lower limit value, or that the evaluation value of the head element becomes smaller than a predetermined replacement threshold.

For example, the table update unit 34 executes the following processing when any target residual decision variable among two or more residual decision variables is included in the head element.

When the target residual decision variable does not overlap with any replacement-source decision variable included in the decision variable replacement table, the table update unit 34 newly registers a first entry, which is an example of the entry, in the decision variable replacement table and deletes the head element from the priority queue.

The first entry includes the target residual decision variable as the replacement-source decision variable. In addition, the first entry includes a value obtained by binarizing the average value for the target residual decision variables to the first value or the second value as the replacement value.

When the target residual decision variable overlaps with any replacement-source decision variable included in the decision variable replacement table, the table update unit 34 deletes the head element from the priority queue without newly registering the entry in the decision variable replacement table.

Furthermore, for example, the table update unit 34 executes the following processing in a case where any target variable set among the plurality of variable sets is included in the head element. The target variable set represents a set of a first residual decision variable and a second residual decision variable among the two or more residual decision variables.

In a case where the first residual decision variable does not overlap with any replacement-source decision variable included in the decision variable replacement table and the second residual decision variable does not overlap with any replacement-source decision variable included in the decision variable replacement table, the table update unit 34 newly registers a second entry, which is an example of the entry, in the decision variable replacement table and deletes the head element from the priority queue.

The second entry includes the first residual decision variable as the replacement-source decision variable. In addition, the second entry includes, as the replacement value, the second residual decision variable multiplied by a sign obtained by encoding the correlation value for the target variable set into the non-inverted sign or the inverted sign.

Further, when the first residual decision variable does not overlap with any replacement-source decision variable included in the decision variable replacement table and the second residual decision variable overlaps with any replacement-source decision variable included in the decision variable replacement table, the table update unit 34 newly registers a third entry, which is an example of the entry, in the decision variable replacement table and deletes the head element from the priority queue.

The third entry includes the first residual decision variable as the replacement-source decision variable. In addition, the third entry includes a first calculated value as the replacement value. The first calculated value is a value obtained by multiplying the replacement value included in the entry including the second residual decision variable in the decision variable replacement table as the replacement-source decision variable by the sign obtained by encoding the correlation value for the target variable set into the non-inverted sign or the inverted sign.

When the first residual decision variable overlaps with any replacement-source decision variable included in the decision variable replacement table and the second residual decision variable overlaps with any replacement-source decision variable included in the decision variable replacement table, the table update unit 34 deletes the head element from the priority queue without newly registering the entry in the decision variable replacement table.

When all the values of the plurality of decision variables included in the master problem are registered in the decision variable replacement table by the table update unit 34, the solution output unit 36 outputs the solution to the master problem based on all the values of the plurality of decision variables registered in the decision variable replacement table.

In this case, the solution output unit 36 traces the entries included in the decision variable replacement table in the reverse order of the serial numbers from the end to the head of the serial numbers, and determines the replacement-source decision variable among the plurality of decision variables based on the replacement value. Then, the solution output unit 36 outputs, as a solution to the master problem, a value of each of the plurality of decision variables that is determined.

More specifically, for each of the plurality of decision variables, when the replacement value is the first value, the solution output unit 36 sets the value of the corresponding decision variable as the first value. When the replacement value is the second value, the solution output unit 36 sets the value of the corresponding decision variable as the second value. When the replacement value is the previously determined decision variable multiplied by the non-inverted sign, the solution output unit 36 sets the value of the corresponding decision variable as the value determined for the previously determined decision variable. When the replacement value is the previously determined decision variable multiplied by the inverted sign, the solution output unit 36 sets the value of the corresponding decision variable as a value obtained by inverting the value determined for the previously determined decision variable.

With the functional configuration as described above, for example, the central processing device 13 repeats processing of dividing each of the plurality of decision variables included in the master problem into a decision variable having a large influence and a decision variable having a small influence, replacing the decision variable having the small influence with an estimated value, performing sampling and statistical processing on the decision variable having the large influence, and replacing the decision variable having a strong statistical bias with a value based on the statistical bias. As a result, the central processing device 13 can calculate and output an approximate solution of the master problem. Even in a case where the network represented by the master problem does not have a natural total order or partial order and does not have a cluster structure, the central processing device 13 as described above can extract the subproblem structure from the network and calculate an accurate solution in a short time.

Hereinafter, the program executed by the problem solving apparatus 1 will be described in more detail.

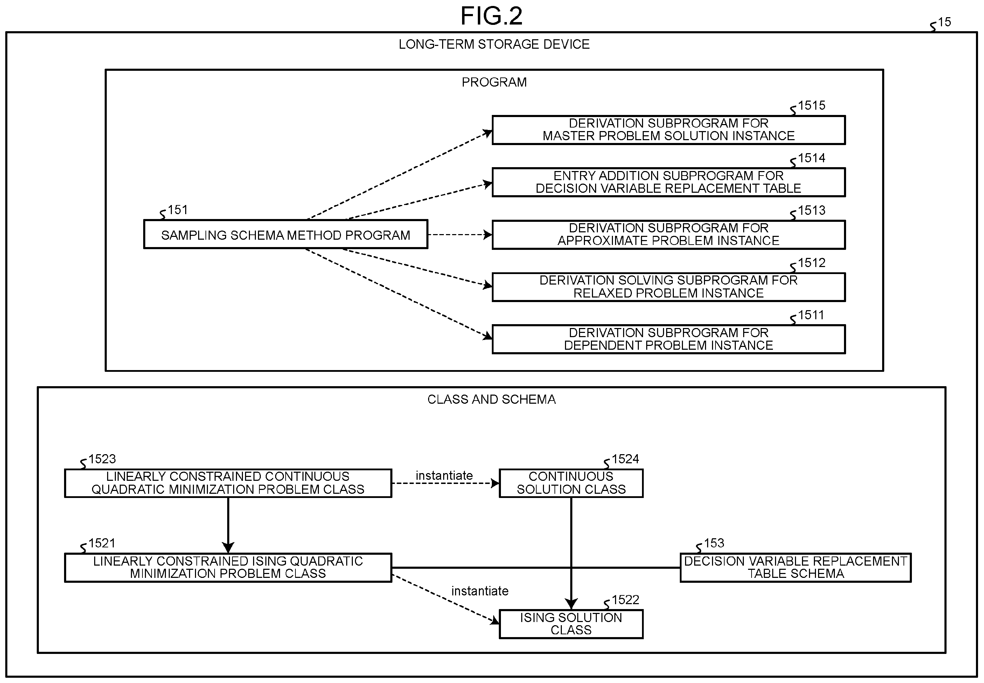

FIG. 2 is a diagram illustrating information stored in the long-term storage device 15.

The long-term storage device 15 stores a sampling schema method program 151 as a program. The sampling schema method program 151 includes a derivation subprogram 1511 for the dependent problem instance, a derivation solving subprogram 1512 for the relaxed problem instance, a derivation subprogram 1513 for the approximate problem instance, an entry addition subprogram 1514 for the decision variable replacement table, and a derivation subprogram 1515 for the master problem solution instance.

The long-term storage device 15 stores, as a class and a schema, a linearly constrained Ising quadratic minimization problem class 1521, an Ising solution class 1522, a linearly constrained continuous quadratic minimization problem class 1523, a continuous solution class 1524, and a decision variable replacement table schema 153.

The linearly constrained Ising quadratic minimization problem class 1521 is represented as IsingProblem. The linearly constrained Ising quadratic minimization problem class 1521 is a class representing a normalized linearly constrained Ising quadratic minimization problem. The linearly constrained Ising quadratic minimization problem class 1521 can generate problem instances that include data represented by Formulas (1) to (9) below. Note that individual problem instances are distinguished by indices.

Formula (1) represents an index set.
[Mathematical formula 1] $Index$ (1)

Formula (2) represents a decision variable.
[Mathematical formula 2] $\begin{matrix}{x}_{i} ∈ \left\{-1,+1\right\} \\ for i ∈ Index\end{matrix}$ (2)

Formula (3) represents a standard form of the objective function.
[Mathematical formula 3] $E \left(x\right) = \frac{1}{2} {\sum }_{i ∈ Index , j ∈ Index , i < j} {J}_{i , j} ⋅ {x}_{i} ⋅ {x}_{j} + {\sum }_{i ∈ Index} {h}_{i} ⋅ {x}_{i}$ (3)

Formula (4) represents a quadratic coefficient of the objective function.
[Mathematical formula 4] $\begin{matrix}{J}_{i , j} ∈ ℝ \\ for ∀ i ∈ Index , ∀ j ∈ Index , i > j \\ {J}_{i , j} = 0 \\ for ∀ i ∈ Index , ∀ j ∈ Index , i \leq j\end{matrix}$ (4)

Formula (5) represents a linear coefficient of the objective function.
[Mathematical formula 5] $\begin{matrix}{h}_{i} ∈ ℝ \\ for ∀ i ∈ Index\end{matrix}$ (5)

Formula (6) represents a standard form of the linear constraint.
[Mathematical formula 6] $\begin{matrix}{\sum }_{i ∈ Index} {A}_{k , i} ⋅ {x}_{i} \leq {b}_{k} \\ for 1 \leq ∀ k \leq M\end{matrix}$ (6)

Formula (7) represents the number of linear constraints.
[Mathematical formula 7] $M ∈ ℤ , M \geq 0$ (7)

Formula (8) represents a coefficient of the linear constraint.
[Mathematical formula 8] $\begin{matrix}{A}_{k , i} ∈ ℝ \\ for 1 \leq ∀ k \leq M , ∀ i ∈ Index\end{matrix}$ (8)

Formula (9) represents an upper limit value of the linear constraint.
[Mathematical formula 9] $\begin{matrix}{b}_{k} ∈ ℝ \\ for 1 \leq ∀ k \leq M\end{matrix}$ (9)

Note that the quadratic coefficient of the objective function of Formula (4) is expressed by the diagonal term=0 and the lower triangular matrix by normalization. For example, it is assumed that a general coefficient indicated in Formula (10) is given.
[Mathematical formula 10] $\begin{matrix}J {′}_{i , j} ∈ ℝ \\ for ∀ i ∈ Index , ∀ j ∈ Index\end{matrix}$ (10)

In such a case, the quadratic coefficient of the objective function is normalized as indicated in Formula (11).
[Mathematical formula 11] $\begin{matrix}{J}_{i , j} = J {′}_{i , j} + J {′}_{j , i} \\ for ∀ i ∈ Index , ∀ j ∈ Index , i > j \\ {J}_{i , j} = 0 \\ for ∀ i ∈ Index , ∀ j ∈ Index , i \leq j\end{matrix}$ (11)

Furthermore, the standard form of the linear constraint of Formula (6) is expressed by a coefficient matrix and an upper limit value by normalization. For example, it is assumed that the general linear constraint indicated in Formula (12) is given.
[Mathematical formula 12] $\begin{matrix}{\sum }_{i ∈ Index} A {′}_{k , i} ⋅ {x}_{i} \leq b {′}_{k} \\ for 1 \leq ∀ k \leq M ′ \\ {\sum }_{i ∈ Index} A {"}_{k , i} ⋅ {x}_{i} \geq b {"}_{k} \\ for 1 \leq ∀ k \leq M " \\ {\sum }_{i ∈ Index} A {‴}_{k , i} ⋅ {x}_{i} = b {‴}_{k} \\ for 1 \leq ∀ k \leq M ‴\end{matrix}$ (12)

In such a case, the linear constraint is normalized as indicated in Formula (13).
[Mathematical formula 13] $\begin{matrix}M = M ′ + M " + 2 M ‴ \\ {A}_{k , i} = A {′}_{k , i} \\ for 1 \leq ∀ k \leq M ′ , i ∈ Index \\ {A}_{k + M ′ , i} = - A {"}_{k , i} \\ for 1 \leq ∀ k \leq M " , i ∈ Index \\ {A}_{k + M ′ + M " , i} = A {‴}_{k , i} \\ for 1 \leq ∀ k \leq M ′ , i ∈ Index \\ {A}_{k + M ′ + M " + M ‴ , i} = - A {‴}_{k , i} \\ for 1 \leq ∀ k \leq M ′ , i ∈ Index \\ {b}_{k} = b {′}_{k} \\ for 1 \leq ∀ k \leq M ′ \\ {b}_{k + M ′} = - b {"}_{k} \\ for 1 \leq ∀ k \leq M " \\ {b}_{k + M ′ + M "} = b {‴}_{k} \\ for 1 \leq ∀ k \leq M ‴ \\ {b}_{k + M ′ + M " + M ‴} = - b {‴}_{k} \\ for 1 \leq ∀ k \leq M ‴\end{matrix}$ (13)

The Ising solution class 1522 is represented as IsingSolution. When a problem instance is solved, the Ising solution class 1522 can generate an instance including data represented by the following Formulas (14) and (15) corresponding to the solution.

Formula (14) represents an index set.
[Mathematical formula 14] $Index$ (14)

Formula (15) represents a value of the solution vector.
[Mathematical formula 15] $\begin{matrix}{\hat{x}}_{i} ∈ \left\{-1,+1\right\} \\ for ∀ i ∈ Index\end{matrix}$ (15)

The linearly constrained continuous quadratic minimization problem class 1523 is represented as ContinuousProblem. The linearly constrained continuous quadratic minimization problem class 1523 is a class obtained by continuously relaxing a decision variable based on the linearly constrained Ising quadratic minimization problem class 1521.

Continuous relaxation refers to conversion of a decision variable, which is a binary variable, into a continuous variable. In the present embodiment, continuous relaxation refers to conversion of a decision variable into a continuous variable of -1 or more and +1 or less as indicated in Formula (16).
[Mathematical formula 16] $\begin{matrix}- 1 \leq {x}_{i} \leq + 1 \\ for i ∈ Index\end{matrix}$ (16)

The continuous solution class 1524 is represented as IsingSolution. When a problem instance is solved, the continuous solution class 1524 can generate an instance including data represented by the following Formulas (17) and (18) corresponding to the solution.

Formula (17) represents an index set.
[Mathematical formula 17] $Index$ (17)

Formula (18) represents a value of the solution vector.
[Mathematical formula 18] $\begin{matrix}- 1 \leq {\hat{x}}_{i} \leq + 1 \\ for ∀ i ∈ Index\end{matrix}$ (18)

Since the decision variable is continuously relaxed in the linearly constrained continuous quadratic minimization problem class 1523, the range of the solution is -1 or more and +1 or less.

The decision variable replacement table schema 153 is represented as ReplaceTable. The decision variable replacement table schema 153 is used when the decision variable is replaced with a value. The decision variable replacement table schema 153 is a schema of the decision variable replacement table 125. The decision variable replacement table 125 is a table in which sets of the decision variable of the replacement-source and the replacement value are managed with serial numbers.

Formula (19) represents the number of entries in the table.
[Mathematical formula 19] $Size$ (19)

However, the number of entries in the table is limited as in Formula (20).
[Mathematical formula 20] $0 \leq Size \leq \left|{Index}^{main}\right|$ (20)

|Index^{main}| is a preset value and is an upper limit value of the number of entries in the table.

Formula (21) represents one of the columns of the table and represents the serial number of the entry.
[Mathematical formula 21] $\begin{matrix}Id \\ for 1 \leq ∀ Id \leq Size\end{matrix}$ (21)

However, the serial number is an integer from 1 to Size in order.

Formula (22) represents one of the columns of the table and represents the decision variable of the replacement-source.
[Mathematical formula 22] ${Address}_{Id} ∈ \left\{{x}_{i}\left|i∈Index\right.\right\}$ (22)

However, the decision variable of the replacement-source does not overlap. That is, the decision variable of the replacement-source satisfies the condition of Formula (23).
[Mathematical formula 23] $\begin{matrix}{Address}_{Id} \neq {Address}_{Id ′} \\ for 1 \leq ∀ Id ′ < Id\end{matrix}$ (23)

Formula (24) represents one of the columns of the table and represents the replacement value.
[Mathematical formula 24] ${Value}_{Id} ∈ \left\{-1,+1\right\} ∪ \left\{-{x}_{j},+{x}_{j}\left|j∈Index\right.\right\}$ (24)

However, the replacement value does not include the registered decision variable as the decision variable of the replacement-source. That is, the replacement value satisfies the condition of Formula (25).
[Mathematical formula 25] $\begin{matrix}Valu {e}_{Id} ∉ \left\{-Addres{s}_{Id ′},+Addres{s}_{Id ′}\right\} \\ for 1 \leq ∀ Id ′ < Id\end{matrix}$ (25)

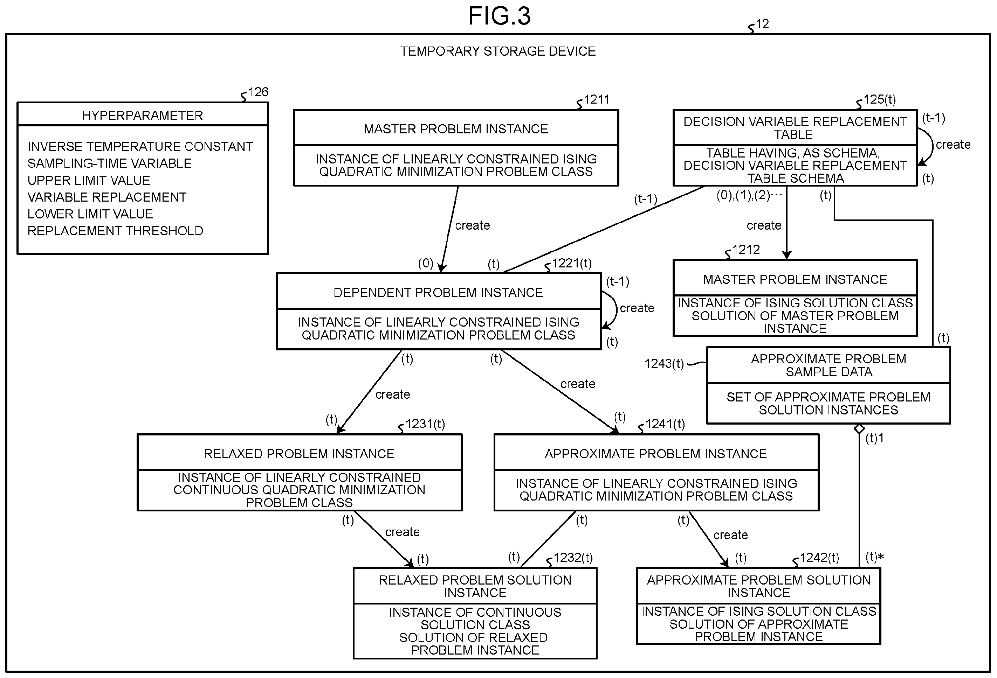

FIG. 3 is a diagram illustrating information stored in the temporary storage device 12.

The temporary storage device 12 stores a master problem instance 1211, a master problem solution instance 1212, a dependent problem instance 1221(t), a relaxed problem instance 1231(t), a relaxed problem solution instance 1232(t), an approximate problem instance 1241(t), an approximate problem solution instance 1242(t), approximate problem sample data 1243(t), a decision variable replacement table 125(t), and a hyperparameter 126.

Note that t represents the number of times of repetitive processing. t is an integer of 0 or more.

The master problem instance 1211 is represented as IsingProblem^{main}. The master problem instance 1211 is an instance of the linearly constrained Ising quadratic minimization problem class 1521.

The master problem solution instance 1212 is represented as IsingSolution^{main}. The master problem solution instance 1212 is an instance of the Ising solution class 1522. That is, the master problem solution instance 1212 is the solution of the master problem instance 1211.

The dependent problem instance 1221(t) is represented as IsingProblem^{sub,(t)}. The dependent problem instance 1221(t) is an instance of the linearly constrained Ising quadratic minimization problem class 1521.

The relaxed problem instance 1231(t) is represented as ContinuousProblem^{relaxed,(t)}. A relaxed problem instance 1231(t) is an instance of a linearly constrained continuous quadratic minimization problem class 1523.

The relaxed problem solution instance 1232(t) is represented as ContinuousSolution^{relaxed,(t)}. The relaxed problem solution instance 1232(t) is an instance of the continuous solution class 1524. That is, the relaxed problem solution instance 1232(t) is the solution of the relaxed problem instance 1231(t).

The approximate problem instance 1241(t) is represented as IsingProblem^{relaxed,(t)}. The approximate problem instance 1241(t) is an instance of a linearly constrained Ising quadratic minimization problem class 1521.

The approximate problem solution instance 1242(t) is expressed as IsingSolution^{approx,(t)}. The approximate problem solution instance 1242(t) is an instance of the Ising solution class 1522. That is, the approximate problem solution instance 1242(t) is the solution of the approximate problem instance 1241(t).

The approximate problem sample data 1243(t) is represented as SampleData^{approx,(t)}. The approximate problem sample data 1243(t) is a set of approximate problem solution instances 1242(t).

The decision variable replacement table 125(t) is represented as ReplaceTable^{(t)}. The decision variable replacement table 125(t) is a table having, as a schema, the decision variable replacement table schema 153.

Table 1 is an example of the decision variable replacement table 125(t).

**[Table 1]**

| Serial number Id | Replacement-source decision variable Adress_{Id} | Replacement value Value_{Id} |
|---|---|---|
| 1 | x₂ | +1 |
| 2 | x₅ | +x₄ |
| 3 | x₄ | -1 |
| ... | ... | ... |

In the decision variable replacement table 125(t), an entry reference and an entry addition operation are performed. In addition, in the decision variable replacement table 125(t), an entry addition operation is repeatedly performed.

When a new decision variable replacement table 125(t) (ReplaceTable^{(t)}) in which entries are added to the immediately preceding decision variable replacement table 125(t-1) (ReplaceTable^{(t-1)}) is created, a difference between the immediately preceding decision variable replacement table 125(t-1) and the new decision variable replacement table 125(t) is expressed by increasing the number of entries in the table after the serial number, the decision variable of the replacement-source, and the replacement value are stored in the common storage area. The temporary storage device 12 can suppress the usage by storing data representing such a difference.

In such a decision variable replacement table 125(t), the value of determined decision variable among the plurality of decision variables is registered. In the decision variable replacement table 125(t), entries including a serial number (Id), a replacement-source decision variable (Adress_{Id}), and a replacement value (Value_{Id}) are registered.

In addition, the replacement value (Value_{Id}) represents the first value (+1), the second value (-1), the previously determined decision variable (xⱼ) multiplied by the non-inverted sign (+1) without inverting the sign, or the previously determined decision variable (-xⱼ) multiplied by the inverted sign (-1) that inverts the sign. The previously determined decision variable (xⱼ) represents a replacement-source decision variable included in the entry having a later serial number (Id).

In a case where the value of the replacement-source decision variable (Value_{Id}) has a correlation with the value of the previously determined decision variable (xⱼ), such a replacement value (Value_{Id}) is represented by a value (+xⱼ) obtained by multiplying the value of the previously determined decision variable (xⱼ) by a non-inverted sign or a value (-xⱼ) obtained by multiplying the value of the previously determined decision variable by an inverted sign.

The decision variable replacement table 125(0) before the solving process of the master problem is an empty state including no entry. In the decision variable replacement table 125(t), entries are sequentially added in ascending order of the serial number (Id). The decision variable replacement table 125(T) after the completion of the solving process for the master problem includes entries corresponding to the number of the plurality of decision variables.

In such a decision variable replacement table 125(t), a decision variable having a large influence in the master problem can be included as a replacement-source decision variable (Adress_{Id}) in an entry in an order before a serial number (Id) than a decision variable having a small influence in the master problem. Therefore, in the decision variable replacement table 125(t), the value of the decision variable having a large influence is registered earlier than the value of the decision variable having a small influence.

The hyperparameter 126 includes an inverse temperature constant 1261, a sampling-time variable upper limit value 1262, a variable replacement lower limit value 1263, and a replacement threshold 1264.

The inverse temperature constant 1261 is expressed as Formula (26).
[Mathematical formula 26] $β ∈ ℝ , β > 0$ (26)

The sampling-time variable upper limit value 1262 is expressed as Formula (27).
[Mathematical formula 27] ${UpperLimit}^{sampling} ∈ ℤ , {UpperLimit}^{sampling} \geq 1$ (27)

The variable replacement lower limit value 1263 is expressed as Formula (28).
[Mathematical formula 28] ${LowerLimit}^{replace} ∈ ℤ , {LowerLimit}^{replace} \geq 1$ (28)

The replacement threshold 1264 is expressed as Formula (29).
[Mathematical formula 29] ${θ}^{replace} ∈ ℝ , {θ}^{replace} > 0$ (29)

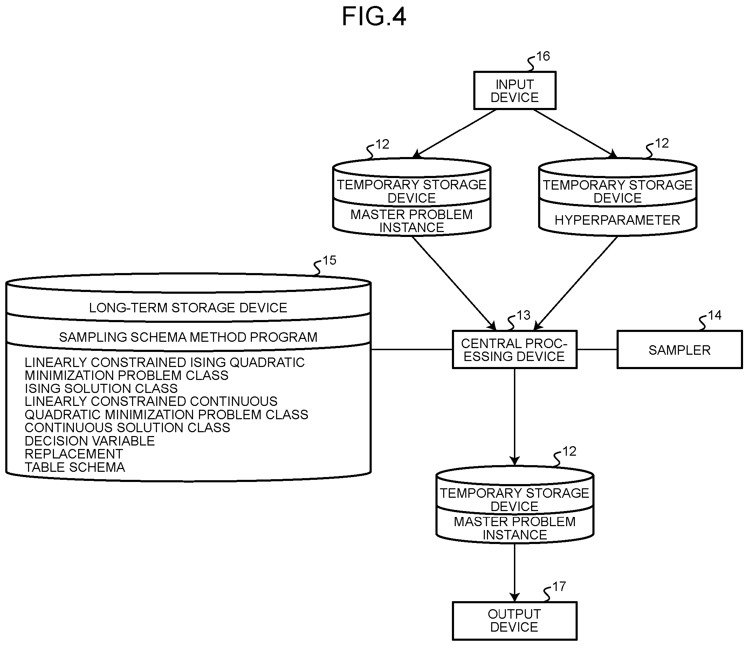

FIG. 4 is a functional block diagram schematically illustrating a processing flow of the problem solving apparatus 1.

The input device 16 receives a master problem instance 1211 and a hyperparameter 126. The temporary storage device 12 stores the master problem instance 1211 received by the input device 16. In addition, the temporary storage device 12 stores the hyperparameter 126 received by the input device 16.

The central processing device 13 executes processing based on the sampling schema method program 151 stored in the long-term storage device 15. In addition, the central processing device 13 solves the master problem instance 1211 using the sampler 14 with reference to the hyperparameter 126 to obtain the master problem solution instance 1212. The central processing device 13 then stores the master problem solution instance 1212 in the temporary storage device 12. The output device 17 outputs the master problem solution instance 1212 stored in the temporary storage device 12.

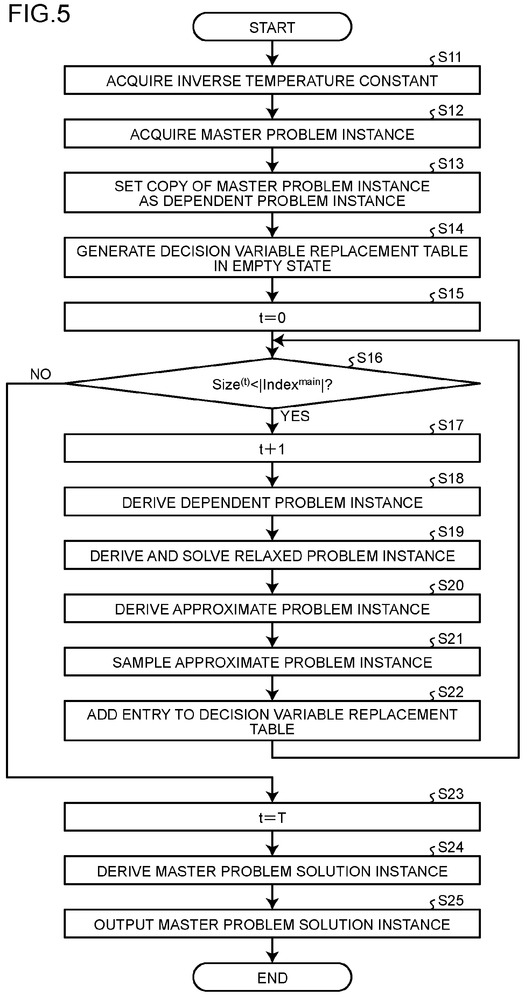

FIG. 5 is a flowchart illustrating a processing flow of the central processing device 13 that has executed the sampling schema method program 151.

The central processing device 13 executes the sampling schema method program 151 to execute the processing of S11 to S25 in FIG. 5. By executing the processing of S11 to S25, the central processing device 13 outputs a master problem solution instance 1212 (IsingSolution^{main}) as a good approximate solution to the master problem instance 1211 (IsingProblem^{main}).

The sampling schema method program 151 causes the central processing device 13 to execute a process of repeating a procedure of acquiring a schema by sampling and applying the schema to reduce the number of decision variables in order to efficiently obtain an approximate solution for the linearly constrained Ising quadratic minimization problem.

Among the linearly constrained Ising quadratic minimization problems, a problem having a small number of decision variables can be solved as it is by a normal QUBO solver. Among the linearly constrained Ising quadratic minimization problems, a problem having locality between decision variables can be solved by a normal QUBO solver for each subproblem by performing subproblem division using the locality even when the number of decision variables is large. However, the linearly constrained Ising quadratic minimization problem with a large number of decision variables and no locality between the decision variables is very difficult to solve with a normal QUBO solver. The problem solving apparatus 1 according to the present embodiment can solve the linearly constrained Ising quadratic minimization problem having a large number of such decision variables and no locality between the decision variables.

First, in S11, the central processing device 13 acquires the inverse temperature constant 1261 included in the hyperparameter 126.

Subsequently, in S12, the central processing device 13 acquires the master problem instance 1211 (IsingProblem^{main}).

By executing the processing of S12, the problem solving apparatus 1 can acquire the master problem that minimizes the objective function including the plurality of decision variables under the constraint condition or without the constraint condition. Each of the plurality of decision variables in the master problem acquired in S12 is a binary variable representing the first value (+1) or the second value (-1). The objective function of the master problem acquired in S12 is a quadratic function. Further, the constraint condition of the master problem acquired in S12 is expressed by one or more linear constraint expressions including any decision variable among the plurality of decision variables.

Subsequently, in S13, the central processing device 13 sets a copy of the master problem instance 1211 (IsingProblem^{main}) as the dependent problem instance 1221(0) (IsingProblem^{sub,(0)}).

Subsequently, in S14, the central processing device 13 generates the decision variable replacement table 125(0) (ReplaceTable⁽⁰⁾) in an empty state.

Subsequently, in S15, the central processing device 13 initializes the repetition number t to t=0.

Subsequently, in S16, the central processing device 13 determines whether Size^{(t)} is smaller than |Index^{main}|. That is, the central processing device 13 determines whether the number of entries in the table is smaller than an upper limit value of the number of entries in the table set in advance. In other words, the central processing device 13 repeats the processing from S17 to S22 until all the decision variables included in the master problem instance 1211 (IsingProblem^{main}) are registered in the decision variable replacement table 125(t).

In a case where Size^{(t)} is equal to or larger than |Index^{main}| (No in S16), that is, in a case where all the decision variables included in the master problem instance 1211 (IsingProblem^{main}) are registered in the decision variable replacement table 125(t), the central processing device 13 advances the processing to S23.

When Size^{(t)} is smaller than |Index^{main}| (Yes in S16), the central processing device 13 advances the processing to S17.

In S17, the central processing device 13 performs t+1 and adds 1 to t.

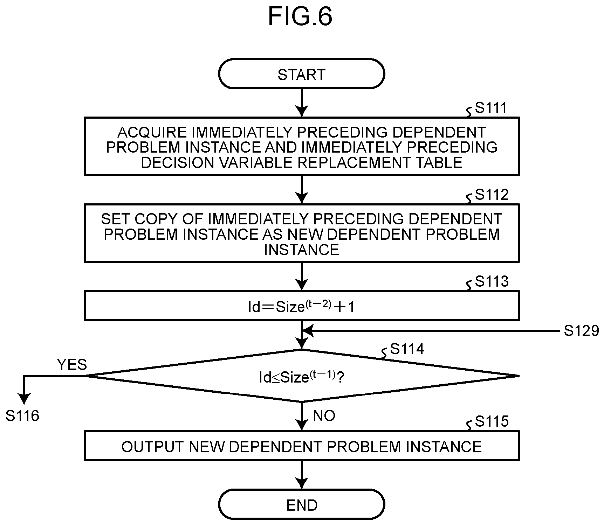

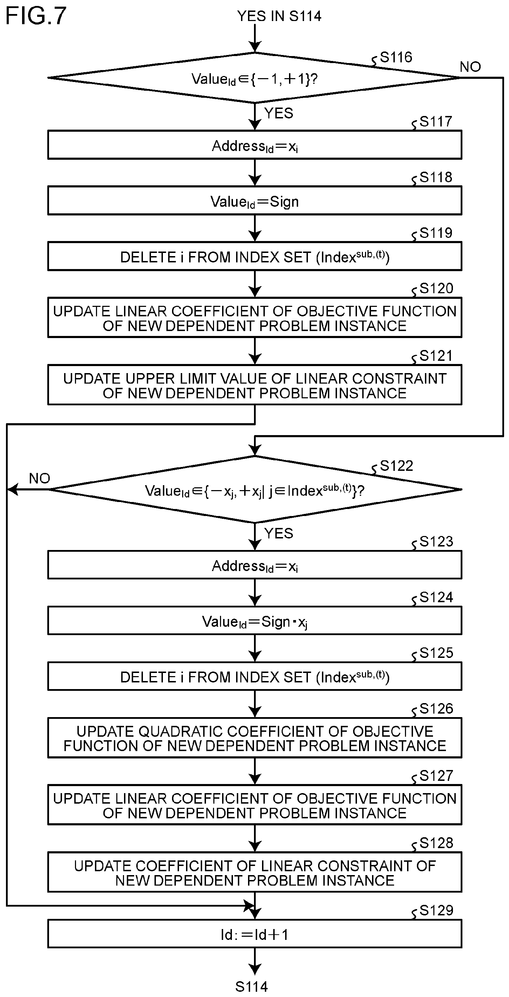

Subsequently, in S18, the central processing device 13 calls and executes the derivation subprogram 1511 for the dependent problem instance to derive the dependent problem instance 1221(t). The central processing device 13 derives a new dependent problem instance 1221(t) (IsingProblem^{sub,(t)}) by using the immediately preceding dependent problem instance 1221(t-1) (IsingProblem^{sub,(t-1)}) and the immediately preceding decision variable replacement table 125(t-1) (ReplaceTable^{(t-1)}). The new dependent problem instance 1221(t) (IsingProblem^{sub,(t)}) has a smaller number of decision variables and is easier to solve than the immediately preceding dependent problem instance 1221(t-1) (IsingProblem^{sub,(t-1)}). The processing of the derivation subprogram 1511 for the dependent problem instance will be described in more detail with reference to FIGS. 6 and 7.

By executing the process of S18, the problem solving apparatus 1 can generate the dependent problem in response to the execution of the new registration processing of newly registering the value of any of the plurality of decision variables in the decision variable replacement table. When the value of any decision variable of the plurality of decision variables is not registered in the decision variable replacement table, the problem solving apparatus 1 can generate the dependent problem in response to acquisition of the master problem.

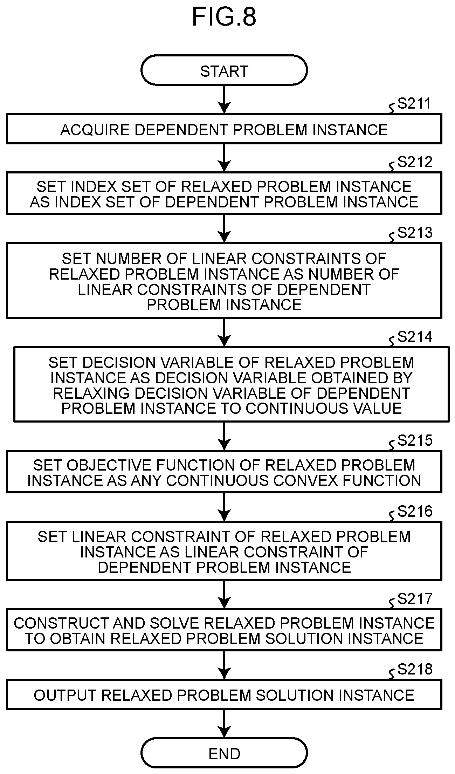

Subsequently, in S19, the central processing device 13 calls and executes the derivation solving subprogram 1512 for the relaxed problem instance to derive and solve the relaxed problem instance 1231(t). The central processing device 13 derives a relaxed problem instance 1231(t) (ContinuousProblem^{relaxed,(t)}) by using the new dependent problem instance 1221(t) (IsingProblem^{sub,(t)}) and determines a relaxed problem solution instance 1232(t) (ContinuousSolution^{relaxed,(t)}). Note that the relaxed problem solution instance 1232(t) (ContinuousSolution^{relaxed,(t)}) satisfies the linear constraint of the new dependent problem instance 1221(t). The processing of the derivation solving subprogram 1512 for a relaxed problem instance is described in further detail with reference to FIG. 8.

By executing the process of S19, the problem solving apparatus 1 can generate a relaxed problem every time a dependent problem is generated and solve the generated relaxed problem.

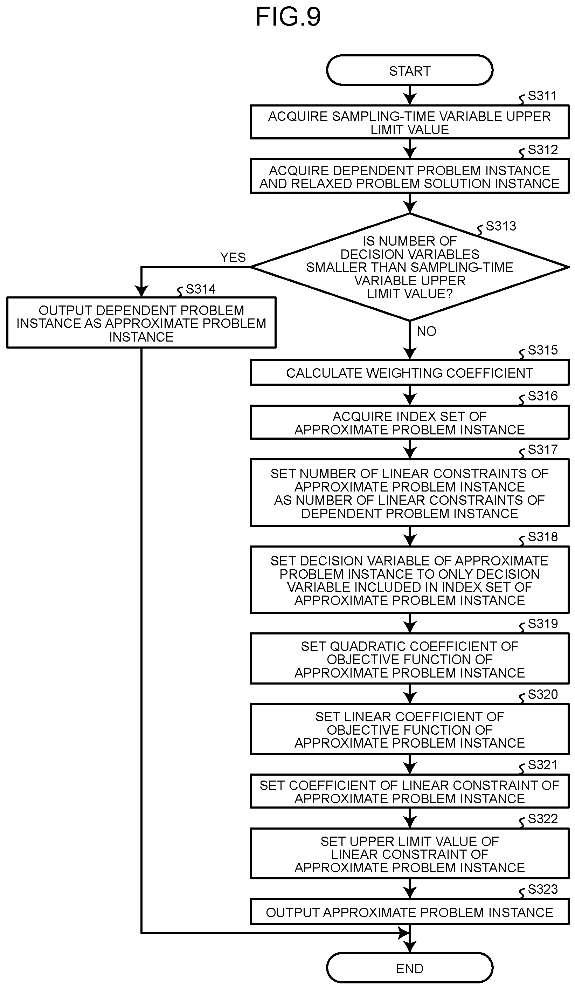

Subsequently, in S20, the central processing device 13 calls and executes the derivation subprogram 1513 for the approximate problem instance to derive the approximate problem instance 1241(t). The central processing device 13 derives an approximate problem instance 1241(t) (IsingProblem^{approx,(t)}) by using the new dependent problem instance 1221(t) (IsingProblem^{sub,(t)}) and the relaxed problem solution instance 1232(t) (ContinuousSolution^{relaxed,(t)}). In the approximate problem instance 1241(t) (IsingProblem^{approx,(t)}), the number of decision variables is smaller than that in the preceding approximate problem instance 1241(t-1) (IsingProblem^{approx,(t-1)}), and the number of decision variables is equal to or smaller than the sampling-time variable upper limit value 1262 (UpperLimit^{sampling}), which facilitates sampling. The processing of the derivation subprogram 1513 for the approximate problem instance will be described in more detail with reference to FIG. 9.

By executing the process of S20, the problem solving apparatus 1 can generate an approximate problem every time a dependent problem is generated.

Subsequently, in S21, the central processing device 13 samples the approximate problem instance 1241(t). The central processing device 13 performs sampling using the approximate problem instance 1241(t) (IsingProblem^{approx,(t)}) and the inverse temperature constant 1261 to obtain approximate problem sample data 1243(t) (SampleData^{approx, (t)}).

Note that the central processing device 13 performs sampling using the sampler 14. The sampler 14 outputs a plurality of solutions. The sampler 14 may output a plurality of solutions with respect to one provided problem by executing a plurality of engines in parallel, or one engine may repeatedly perform a solving process a plurality of times and output a plurality of solutions. The sampler 14 can shorten a calculation time for outputting a plurality of solutions by executing a plurality of engines in parallel. Then, the sampler 14 outputs a result of statistical processing of the plurality of calculated solutions.

By executing the processing of S21, the problem solving apparatus 1 can generate a plurality of solutions to the approximate problem every time the approximate problem is generated.

Subsequently, in S22, the central processing device 13 calls and executes the entry addition subprogram 1514 for the decision variable replacement table, and generates the decision variable replacement table 125(t) to which the entry is added. By using the approximate problem sample data 1243(t) (SampleData^{approx,(t)}), the central processing device 13 adds an entry to the immediately preceding decision variable replacement table 125(t-1) (ReplaceTable^{(t-1)}) to generate a new decision variable replacement table 125(t) (ReplaceTable^{(t)}). Note that, in a case where an entry is added to the decision variable replacement table 125(t) (ReplaceTable^{(t)}), when one or more entries are added for each repetition, the central processing device 13 satisfies the end condition with |Index^{main}| times of repetition at the maximum.

By executing the processing of S22, the problem solving apparatus 1 can determine the value by performing the statistical processing for each of the two or more residual decision variables based on the plurality of solutions to the approximate problem every time the plurality of solutions to the approximate problem are acquired. Then, the problem solving apparatus 1 can perform a new registration processing of newly registering a value determined by performing statistical processing for each of one or more decision variables corresponding to a part or all of the two or more residual decision variables in the decision variable replacement table.

Upon completion of the process of S22, the central processing device 13 returns the process to S16.

In S23, the central processing device 13 sets t at the end of the repetition as T.

Subsequently, in S24, the central processing device 13 calls and executes the derivation subprogram 1515 for the master problem solution instance to derive the master problem solution instance 1212. The central processing device 13 derives a master problem solution instance 1212 (IsingSolution^{main}) by using a decision variable replacement table 125(T) (ReplaceTable^{(T)}) at the end of repetition.

Subsequently, in S25, the central processing device 13 outputs a master problem solution instance 1212 (IsingSolution^{main}). After outputting, the central processing device 13 may delete the master problem instance 1221 (IsinProblem^{main}).

By executing the processing of S23 to S25, when all the values of the plurality of decision variables included in the master problem are registered in the decision variable replacement table by the table update unit 34, the problem solving apparatus 1 can output the solution to the master problem based on all the values of the plurality of decision variables registered in the decision variable replacement table.

By executing the above processing, the problem solving apparatus 1 can output the master problem solution instance 1212 (IsingSolution^{main}) as a good approximate solution to the master problem instance 1211 (IsingProblem^{main}).

FIGS. 6 and 7 are flowcharts illustrating a processing flow of the central processing device 13 that has executed the derivation subprogram 1511 for the dependent problem instance. FIG. 6 illustrates processing from S111 to S115. FIG. 7 illustrates processing from S116 to S129.

The central processing device 13 executes the derivation subprogram 1511 for the dependent problem instance to execute the processes of S111 to S129 in FIGS. 6 and 7. By executing the processing of S111 to S129, the central processing device 13 derives a new dependent problem instance 1221(t) (IsingProblem^{sub,(t)}) by using the immediately preceding dependent problem instance 1221(t-1) (IsingProblem^{sub,(t-1)}) and the immediately preceding decision variable replacement table 125(t-1) (ReplaceTable^{(t-1)}).

First, in S111, the central processing device 13 acquires the immediately preceding dependent problem instance 1221(t-1) (IsingProblem^{sub,(t-1)}) and the immediately preceding decision variable replacement table 125(t-1) (ReplaceTable^{(t-1)}).

Subsequently, in S112, the central processing device 13 sets a copy of the immediately preceding dependent problem instance 1221(t-1) (IsingProblem^{sub,(t-1)}) as a new dependent problem instance 1221(t) (IsingProblem^{sub,(t)}).

Subsequently, in S113, the central processing device 13 initializes the serial number Id as indicated in Formula (30) in order to process the entries added to the immediately preceding decision variable replacement table 125(t-1) (ReplaceTable^{(t-1)}) in the normal order.
[Mathematical formula 30] $Id = {Size}^{\left(t-2\right)} + 1$ (30)

Subsequently, in S114, the central processing device 13 determines whether Id is equal to or smaller than Size^{(t-1)}. When Id is not equal to or smaller than Size^{(t-1)} (No in S114), the central processing device 13 advances the processing to S115. When Id is equal to or smaller than Size^{(t-1)} (Yes in S114), the central processing device 13 advances the processing to S116.

In S116, the central processing device 13 determines whether or not the replacement value (Value_{Id}) satisfies Formula (31).
[Mathematical formula 31] ${Value}_{ID} ∈ \left\{-1,+1\right\}$ (31)

When the replacement value (Value_{Id}) satisfies Formula (31) (Yes in S116), the central processing device 13 advances the processing to S117. When the replacement value (Value_{Id}) does not satisfy Formula (31) (No in S116), the central processing device 13 advances the processing to S122.

In S117, the central processing device 13 sets the decision variable (Address_{Id}) as the replacement-source to xᵢ.

Subsequently, in S118, the central processing device 13 sets the replacement value (Value_{Id}) as Sign.

Subsequently, in S119, the central processing device 13 deletes the corresponding index i from the index set (Index^{sub,(t)}) of the new dependent problem instance 1221(t) and updates the index set.

Subsequently, in S120, the central processing device 13 updates the linear coefficient of the objective function of the new dependent problem instance 1221(t) indicated in Formula (32) with the result of replacing xᵢ. [Mathematical formula 32] $\begin{matrix}{h}_{i ′}^{sub , \left(t\right)} \\ for ∀ i ′ ∈ Inde {x}^{sub , \left(t\right)}\end{matrix}$ (32)

Specifically, the central processing device 13 updates as indicated in Formula (33).
[Mathematical formula 33] $\begin{matrix}{h}_{i ′}^{sub , \left(t\right)} : = {h}_{i ′}^{sub , \left(t\right)} + \frac{1}{2} Sign ⋅ {J}_{i , i ′}^{sub , \left(t\right)} + \frac{1}{2} Sign ⋅ {J}_{i ′ , i}^{sub , \left(t\right)} \\ for ∀ i ′ ∈ {Index}^{sub , \left(t\right)}\end{matrix}$ (33)

Note that, in the operation of S120, the central processing device 13 uses the constraint expressed by Formula (34) defined in the linearly constrained Ising quadratic minimization problem class 1521 (IsingProblem). [Mathematical formula 34] $\begin{matrix}{J}_{j , i} ∈ ℝ \\ for ∀ i ∈ Index , ∀ j ∈ Index , i > j \\ {J}_{j , i} = 0 \\ for ∀ i ∈ Index , ∀ j ∈ Index , i \leq j\end{matrix}$ (34)

Subsequently, in S121, the central processing device 13 updates the upper limit value of the linear constraint of the new dependent problem instance 1221(t) indicated in Formula (35) with the result of replacing xᵢ. [Mathematical formula 35] $\begin{matrix}{b}_{k}^{sub , \left(t\right)} \\ for 1 \leq ∀ k \leq M\end{matrix}$ (35)

Specifically, the central processing device 13 updates as indicated in Formula (36).
[Mathematical formula 36] $\begin{matrix}{b}_{k}^{sub , \left(t\right)} : = {b}_{k}^{sub , \left(t\right)} - Sign ⋅ {A}_{k , i}^{sub , \left(t\right)} \\ for 1 \leq ∀ k \leq M\end{matrix}$ (36)

Upon completion of the processing of S121, the central processing device 13 advances the processing to S129.

In S122, the central processing device 13 determines whether or not the replacement value (Value_{Id}) satisfies Formula (37).
[Mathematical formula 37] ${Value}_{Id} ∈ \left\{-{x}_{j},+{x}_{j}\left|j∈{Index}^{sub , \left(t\right)}\right.\right\}$ (37)

When the replacement value (Value_{Id}) satisfies Formula (37) (Yes in S122), the central processing device 13 advances the processing to S123. When the replacement value (Value_{Id}) does not satisfy Formula (37) (No in S122), the central processing device 13 advances the processing to S129.

In S123, the central processing device 13 sets the decision variable (Address_{Id}) as the replacement-source to xᵢ.

Subsequently, in S124, the central processing device 13 sets the replacement value (Value_{Id}) as Sign·xⱼ.

Subsequently, in S125, the central processing device 13 deletes the corresponding index i from the index set (Index^{sub,(t)}) of the new dependent problem instance 1221(t) and updates the index set.

Subsequently, in S126, the central processing device 13 updates the quadratic coefficient of the objective function of the new dependent problem instance 1221(t) indicated in Formula (38) with the result of replacing xᵢ.
[Mathematical formula 38] $\begin{matrix}{J}_{i ′ , j}^{sub , \left(t\right)} \\ for ∀ i ′ ∈ {Index}^{sub , \left(t\right)} , i ′ < j \\ {J}_{j , i ′}^{sub , \left(t\right)} \\ for ∀ i ′ ∈ {Index}^{sub , \left(t\right)} , j < i ′\end{matrix}$ (38)

Specifically, the central processing device 13 updates as indicated in Formula (39).
[Mathematical formula 39] $\begin{matrix}{J}_{i ′ , j}^{sub , \left(t\right)} : = {J}_{i ′ , j}^{sub , \left(t\right)} + Sign ⋅ {J}_{i ′ , i}^{sub , \left(t\right)} + Sign ⋅ {J}_{i , i ′}^{sub , \left(t\right)} \\ for ∀ i ′ ∈ Inde {x}^{sub , \left(t\right)} , i ′ < j \\ {J}_{j , i ′}^{sub , \left(t\right)} : = {J}_{j , i ′}^{sub , \left(t\right)} + Sign ⋅ {J}_{i ′ , i}^{sub , \left(t\right)} + Sign ⋅ {J}_{i , i ′}^{sub , \left(t\right)} \\ for ∀ i ′ ∈ Inde {x}^{sub , \left(t\right)} , j < i ′\end{matrix}$ (39)

Note that, in the operation of S126, the central processing device 13 uses the constraint expressed by Formula (40) defined in the linearly constrained Ising quadratic minimization problem class 1521 (IsingProblem). [Mathematical formula 40] $\begin{matrix}{J}_{i , j} ∈ ℝ \\ for ∀ i ∈ Index , ∀ j ∈ Index , i < j \\ {J}_{i , j} = 0 \\ for ∀ i ∈ Index , ∀ j ∈ Index , i \leq j\end{matrix}$ (40)

Subsequently, in S127, the central processing device 13 updates the linear coefficient of the objective function of the new dependent problem instance 1221(t) indicated in Formula (41) with the result of replacing xᵢ. [Mathematical formula 41] ${h}_{i ′}^{sub , \left(t\right)}$ (41)

Specifically, the central processing device 13 updates as indicated in Formula (42).
[Mathematical formula 42] ${h}_{j}^{sub , \left(t\right)} : = {h}_{j}^{sub , \left(t\right)} + Sign ⋅ {h}_{i}^{sub , \left(t\right)}$ (42)

Subsequently, in S128, the central processing device 13 updates the coefficient of the linear constraint of the objective function of the new dependent problem instance 1221(t) indicated in Formula (43) with the result of replacing xᵢ.
[Mathematical formula 43] $\begin{matrix}{A}_{k , j}^{sub , \left(t\right)} \\ for 1 \leq ∀ k \leq M\end{matrix}$ (43)

Specifically, the central processing device 13 updates as indicated in Formula (44).
[Mathematical formula 44] $\begin{matrix}{A}_{k , j}^{sub , \left(t\right)} : = {A}_{k , j}^{sub , \left(t\right)} + Sing ⋅ {A}_{k , j}^{sub , \left(t\right)} \\ for 1 \leq ∀ k \leq M\end{matrix}$ (44)

Upon completion of the processing of S128, the central processing device 13 advances the processing to S129.

In S129, the central processing device 13 adds 1 to the serial number Id and returns the process to S114. Then, the central processing device 13 repeats the processing from S116 to S129 until Id becomes Size^{(t-1)}.

When Id is no longer equal to or smaller than Size^{(t-1)}, the central processing device 13 advances the processing to S115.

At S115, the central processing device 13 outputs a new dependent problem instance 1221(t) (IsingProblem^{sub,(t)}). After outputting, the central processing device 13 may delete the immediately preceding dependent problem instance 1221(t-1) (IsingProblem^{sub,(t-1)}).

By executing the above processing, the problem solving apparatus 1 can derive a new dependent problem instance 1221(t) (IsingProblem^{sub,(t)}) by using the immediately preceding dependent problem instance 1221(t-1) (IsingProblem^{sub,(t-1)}) and the immediately preceding decision variable replacement table 125(t-1) (ReplaceTable^{(t-1)}).

That is, by executing the processing of S111 to S129, the problem solving apparatus 1 can generate the dependent problem. The dependent problem generated by the processing of S111 to S129 includes, as the plurality of dependent decision variables, two or more decision variables that are not registered as determined in the decision variable replacement table among the plurality of decision variables in the master problem. Further, the dependent problem generated by the processing of S111 to S129 is a problem in which the decision variable registered as determined in the decision variable replacement table among the plurality of decision variables in the master problem is replaced with the value determined.

FIG. 8 is a flowchart illustrating a processing flow of the central processing device 13 that has executed the derivation solving subprogram 1512 for the relaxed problem instance.

The central processing device 13 executes the derivation solving subprogram 1512 for the relaxed problem instance to execute the processes in S211 to S218 in FIG. 8. By executing the processing of S211 to S218, the central processing device 13 derives the relaxed problem instance 1231(t) (ContinuousProblem^{relaxed,(t)}) by using the new dependent problem instance 1221(t) (IsingProblem^{sub,(t)}), and obtains the relaxed problem solution instance 1232(t) (ContinuousSolution^{relaxed,(t)}).

First, in S211, the central processing device 13 acquires the dependent problem instance 1221(t) (IsingProblem^{sub,(t)}).

Subsequently, in S212, the central processing device 13 sets the index set (Index^{sub,(t)}) of the relaxed problem instance 1231(t) as the index set (Index^{sub,(t)}) of the dependent problem instance 1221(t).

Subsequently, in S213, the central processing device 13 sets the number (M) of linear constraints of the relaxed problem instance 1231(t) as the number (M) of linear constraints of the dependent problem instance 1221(t).

Subsequently, in S214, the central processing device 13 sets the decision variable of the relaxed problem instance 1231(t) as a decision variable obtained by relaxing the decision variable of the dependent problem instance 1221(t) to a continuous value. More specifically, the central processing device 13 sets the decision variable of the relaxed problem instance 1231(t) as a variable obtained by relaxing the decision variable of the dependent problem instance 1221(t) to a continuous value of -1 or more and +1 or less as indicated in Formula (45).
[Mathematical formula 45] $\begin{matrix}{x}_{i} ∈ \left[-1,+1\right] \\ for ∀ i ∈ {Index}^{relaxed , \left(t\right)}\end{matrix}$ (45)

Subsequently, in S215, the central processing device 13 sets the objective function of the relaxed problem instance 1231(t) as a function indicated in Formula (46) that is an arbitrary continuous convex function.
[Mathematical formula 46] ${E}^{relaxed , \left(t\right)} \left(x\right)$ (46)

In the present embodiment, the central processing device 13 adopts the function indicated in Formula (47) as the objective function of the relaxed problem instance 1231(t) indicated in Formula (46).
[Mathematical formula 47] ${E}^{relaxed , \left(t\right)} \left(x\right) = {\sum }_{i ∈ {Index}^{sub , \left(t\right)}} \left(\frac{1}{2}λ⋅{x}_{i}^{2}+{h}_{i}⋅{x}_{i}\right)$ (47)

In Formula (47), λ is a real number larger than 0 and is an L2 regularization constant.

At this time, in the relaxed problem solution instance 1232(t) (ContinuousSolution^{relaxed,(t)}), the element not affected by the linear coefficient and the linear constraint becomes 0, and the vector becomes sparse. As a result, the central processing device 13 can suppress the amount of calculation in the derivation subprogram 1511 for the dependent problem instance.

Subsequently, in S216, the central processing device 13 sets the linear constraint of the relaxed problem instance 1231(t) as the linear constraint of the dependent problem instance 1221(t).

Subsequently, in S217, the central processing device 13 constructs a relaxed problem instance 1231(t) (ContinuousProblem^{relaxed,(t)}), and solves the problem using the sampler 14 to obtain a relaxed problem solution instance 1232(t) (ContinuousSolution^{relaxed,(t)}). Since the relaxed problem instance 1231(t) (ContinuousProblem^{relaxed,(t)}) is a continuous convex quadratic optimization problem, the sampler 14 can easily obtain the relaxed problem solution instance 1232(t) (ContinuousSolution^{relaxed,(t)}).

Subsequently, in S218, the central processing device 13 outputs the relaxed problem solution instance 1232(t) (ContinuousSolution^{relaxed,(t)}). After outputting, the central processing device 13 may delete the relaxed problem instance 1231(t) (ContinuousProblem^{relaxed,(t)}).

By executing the above processing, the problem solving apparatus 1 can derive the relaxed problem instance 1231(t) (ContinuousProblem^{relaxed,(t)}) by using the new dependent problem instance 1221(t) (IsingProblem^{sub,(t)}) and obtain the relaxed problem solution instance 1232(t) (ContinuousSolution^{relaxed,(t)}).

That is, by executing the processing of S211 to S218, the problem solving apparatus 1 can generate a relaxed problem. For example, by executing the processing of S212 to S214, the problem solving apparatus 1 can generate a plurality of continuous decision variables corresponding one-to-one to the plurality of dependent decision variables included in the dependent problem. Each of the plurality of continuous decision variables generated by the processing in S212 to S214 is a continuous variable. Further, for example, by executing the processing of S215 to S216, the problem solving apparatus 1 can generate the relaxed problem by replacing each of the plurality of dependent decision variables included in the dependent problem with the corresponding continuous decision variable among the plurality of continuous decision variables and converting the objective function of the dependent problem into the continuous convex quadratic function based on a predetermined rule.

Further, by executing the processing of S217 to S218, the problem solving apparatus 1 can obtain and output the solution of the generated relaxed problem. Since the objective function of the relaxed problem is a continuous convex quadratic function, the problem solving apparatus 1 can calculate the solution of the relaxed problem by simple calculation.

FIG. 9 is a flowchart illustrating a processing flow of the central processing device 13 that has executed the derivation subprogram 1513 for the approximate problem instance.

The central processing device 13 executes the derivation subprogram 1513 for the approximate problem instance to execute the processes of S311 to S323 in FIG. 9. By performing the processing of S311 to S323, the central processing device 13 derives an approximate problem instance 1241(t) (IsingProblem^{approx,(t)}) by using the new dependent problem instance 1221(t) (IsingProblem^{sub,(t)}) and the relaxed problem solution instance 1232(t) (ContinuousSolution^{relaxed,(t)}).

First, in S311, the central processing device 13 acquires the sampling-time variable upper limit value 1262 indicated by Formula (48) included in the hyperparameter 126.
[Mathematical formula 48] ${UpperLimit}^{sampling} ∈ ℤ , {UpperLimit}^{sampling} \geq 1$ (48)

Subsequently, in S312, the central processing device 13 acquires the dependent problem instance 1221(t) (IsingProblem^{sub,(t)}) and the relaxed problem solution instance 1232(t) (ContinuousSolution^{relaxed,(t)}).

Subsequently, in S313, the central processing device 13 determines whether the number of decision variables of the dependent problem instance 1221(t) (IsingProblem^{sub,(t)}) is smaller than the sampling-time variable upper limit value 1262 (UpperLimit^{sampling}). When the number of decision variables of the dependent problem instance 1221(t) (IsingProblem^{sub,(t)}) is smaller than the sampling-time variable upper limit value 1262 (UpperLimit^{sampling}) (Yes in S313), the central processing device 13 advances the processing to S314. When the number of decision variables of the dependent problem instance 1221(t) (IsingProblem^{sub,(t)}) is not smaller than the sampling-time variable upper limit value 1262 (UpperLimit^{sampling}) (No in S313), the central processing device 13 advances the processing to S315.

In S314, the central processing device 13 outputs the dependent problem instance 1221(t) (IsingProblem^{sub,(t)}) as it is as the approximate problem instance 1241(t) (IsingProblem^{approx,(t)}). After outputting, the central processing device 13 may delete the relaxed problem solution instance 1232(t) (ContinuousSolution^{relaxed,(t)}).

In S315, the central processing device 13 calculates a weighting coefficient (Weight^{sub,(t)}) for the dependent problem instance 1221(t) (IsingProblem^{sub,(t)}). For example, the central processing device 13 calculates the weighting coefficient (Weight^{sub,(t)}) by Formula (49). [Mathematical formula 49] ${Weight}_{i}^{sub , \left(t\right)} = \left|{h}_{i}^{sub , \left(t\right)}+\frac{1}{2}{\sum }_{j ∈ {Index}^{sub , \left(t\right)}} \left({J}_{i , j}^{sub , \left(t\right)}+{J}_{j , i}^{sub , \left(t\right)}\right) {\hat{x}}_{j}^{\left(t\right)}\right|$ (49)

The weighting coefficient (Weight^{sub,(t)}) of Formula (49) is calculated using the constraint expressed in Formula (50) defined in the linearly constrained Ising quadratic minimization problem class 1521 (IsingProblem). [Mathematical formula 50] $\begin{matrix}{J}_{i , j} ∈ ℝ \\ for ∀ i ∈ Index , ∀ j ∈ Index , i > j \\ {J}_{i , j} = 0 \\ for ∀ i ∈ Index , ∀ j ∈ Index , i \leq j\end{matrix}$ (50)

Subsequently, in S316, the central processing device 13 acquires an index set corresponding to the number of sampling-time variable upper limit values 1262 (UpperLimit^{sampling}) in descending order among the suffixes of the weighting coefficients (Weight^{sub,(t)}) as an index set (Index^{approx,(t)}) of the approximate problem instance 1241(t).

Subsequently, in S317, the central processing device 13 sets the number of linear constraints of the approximate problem instance 1241(t) as the number of linear constraints of the dependent problem instance 1221(t).

Subsequently, in S318, the central processing device 13 sets the decision variable of the approximate problem instance 1241(t) to only the decision variable included in the index set of the approximate problem instance 1241(t) as indicated in Formula (51).
[Mathematical formula 51] $\begin{matrix}{x}_{i} ∈ \left\{-1,+1\right\} \\ for ∀ i ∈ {Index}^{approx , \left(t\right)}\end{matrix}$ (51)

Subsequently, in S319, the central processing device 13 sets the quadratic coefficient of the objective function of the approximate problem instance 1241(t) indicated in Formula (52).
[Mathematical formula 52] $\begin{matrix}{J}_{i , j}^{approx , \left(t\right)} \\ for ∀ i ∈ {Index}^{approx , \left(t\right)} , ∀ j ∈ {Index}^{approx , \left(t\right)}\end{matrix}$ (52)

Specifically, as indicated in Formula (53), the central processing device 13 uses the quadratic coefficient of the objective function of the dependent problem instance 1221(t) as the quadratic coefficient leaving only a portion included in the index set of the approximate problem instance 1241(t).
[Mathematical formula 53] $\begin{matrix}{J}_{i , j}^{approx , \left(t\right)} = {J}_{i , j}^{sub , \left(t\right)} \\ for ∀ i ∈ {Index}^{approx , \left(t\right)} , ∀ j ∈ {Index}^{approx , \left(t\right)}\end{matrix}$ (53)

The quadratic coefficient of the objective function of the approximate problem instance 1241(t) of Formula (53) is calculated using the constraint indicated in Formula (54) defined in the linearly constrained Ising quadratic minimization problem class 1521 (IsingProblem). [Mathematical formula 54] $\begin{matrix}{J}_{i , j} ∈ ℝ \\ for ∀ i ∈ Index , ∀ j ∈ Index , i > j \\ {J}_{i , j} = 0 \\ for ∀ i ∈ Index , ∀ j ∈ Index , i \leq j\end{matrix}$ (54)

Subsequently, in S320, the central processing device 13 sets the linear coefficient of the objective function of the approximate problem instance 1241(t) indicated in Formula (55).
[Mathematical formula 55] $\begin{matrix}{h}_{i ′}^{approx , \left(t\right)} \\ for ∀ i ′ ∈ Inde {x}^{approx , \left(t\right)}\end{matrix}$ (55)

Specifically, the central processing device 13 substitutes the decision variable not included in the index set of the approximate problem instance 1241(t) with the value of the relaxed problem instance 1231(t) based on the objective function of the dependent problem instance 1221(t) as indicated in Formula (56).
[Mathematical formula 56] $\begin{matrix}{h}_{i}^{approx , \left(t\right)} = {h}_{i}^{sub , \left(t\right)} + \frac{1}{2} {\sum }_{j ∈ {Index}^{sub , \left(t\right)} - {Index}^{approx , \left(t\right)}} \left({J}_{i , j}^{sub , \left(t\right)}+{J}_{j , i}^{sub , \left(t\right)}\right) ⋅ {\hat{x}}_{j}^{\left(t\right)} \\ for ∀ i ∈ {Index}^{sub , \left(t\right)}\end{matrix}$ (56)

The linear coefficient of the objective function of the approximate problem instance 1241(t) of Formula (56) is calculated using the constraint indicated in Formula (54) defined in the linearly constrained Ising quadratic minimization problem class 1521 (IsingProblem).

Subsequently, in S321, the central processing device 13 sets the coefficient of the linear constraint of the approximate problem instance 1241(t) indicated in Formula (57).
[Mathematical formula 57] $\begin{matrix}{A}_{k , i}^{approx , \left(t\right)} \\ for 1 \leq ∀ k \leq M , ∀ i ∈ {Index}^{sub , \left(t\right)}\end{matrix}$ (57)

Specifically, as indicated in Formula (58), the central processing device 13 uses the coefficient of the linear constraint of the dependent problem instance 1221(t) as the coefficient leaving only a portion included in the index set of the approximate problem instance 1241(t). [Mathematical formula 58] $\begin{matrix}{A}_{k , i}^{approx , \left(t\right)} = {A}_{k , i}^{sub , \left(t\right)} \\ for 1 \leq ∀ k \leq M , ∀ i ∈ {Index}^{sub , \left(t\right)}\end{matrix}$ (58)

Subsequently, in S322, the central processing device 13 sets the upper limit value of the linear constraint of the approximate problem instance 1241(t) indicated in Formula (59).
[Mathematical formula 59] $\begin{matrix}{b}_{k}^{approx , \left(t\right)} \\ for 1 \leq ∀ k \leq M\end{matrix}$ (59)

Specifically, based on the linear constraint of the dependent problem instance 1221(t), the central processing device 13 sets an upper limit value obtained by expanding the allowable range by a decision variable not included in the index set of the approximate problem instance 1241(t) as expressed in Formula (60).
[Mathematical formula 60] $\begin{matrix}{b}_{k}^{approx , \left(t\right)} = {b}_{k}^{sub , \left(t\right)} + {\sum }_{j ∈ {Index}^{sub , \left(t\right)} - {Index}^{approx}} \left|{A}_{k , j}^{sub , \left(t\right)}\right| \\ for 1 \leq ∀ k \leq M\end{matrix}$ (60)

Both dependent problem instances 1221(t) and approximate problem instances 1241(t) have been normalized, and extending the tolerance range corresponds to increasing the upper limit value.

Subsequently, in S323, the central processing device 13 constructs and outputs an approximate problem instance 1241(t) (IsingProblem^{approx,(t)}). After outputting, the central processing device 13 may delete the relaxed problem solution instance 1232(t) (ContinuousSolution^{relaxed,(t)}).

By performing the above processing, the problem solving apparatus 1 can derive the approximate problem instance 1241(t) (IsingProblem^{approx,(t)}) by using the new dependent problem instance 1221(t) (IsingProblem^{sub,(t)}) and the relaxed problem solution instance 1232(t) (ContinuousSolution^{relaxed,(t)}).

That is, the problem solving apparatus 1 can generate an approximate problem by executing the processing in S311 to S323. The approximate problem generated by the processing of S311 to S323 can include a part or all of two or more dependent decision variables in descending order from a larger influence among the plurality of dependent decision variables included in the dependent problem as two or more residual decision variables. Further, the approximate problem generated by the processing of S311 to S323 is a problem in which the dependent decision variables excluding a part or all of two or more dependent decision variables in descending order from a larger influence among the plurality of dependent decision variables in the dependent problem are replaced with the estimated values.

For example, by executing the process of S315, the problem solving apparatus 1 can calculate the weighting coefficient for each of the plurality of dependent decision variables. The weighting coefficient calculated by the processing of S315 is an absolute value of a value obtained by accumulating weight values set to the term including the corresponding decision variable among the plurality of decision variables in the master problem.

Subsequently, by executing the processing of S316, the problem solving apparatus 1 can select dependent decision variables the number of which corresponds to the number of preset sampling-time variable upper limit values from the top of the weighting coefficient among the plurality of dependent decision variables. Then, by executing the processing of S317 to S322, the problem solving apparatus 1 can generate an approximate problem including the dependent decision variables corresponding to the number of selected sampling-time variable upper limit values among the plurality of dependent decision variables as two or more residual decision variables. Note that the approximate problem generated by the processing of S317 to S322 is a problem in which an unselected dependent decision variable among a plurality of dependent decision variables in the dependent problem is replaced with an estimated value. The estimated values used in the processes of S317 to S322 are values of the continuous decision variable corresponding to the unselected dependent decision variable among the respective values of the plurality of continuous decision variables included in the solution of the relaxed problem.

In addition, by executing the processing of S313 and S314, when the number of the plurality of dependent decision variables included in the dependent problem is smaller than the sampling-time variable upper limit value, the problem solving apparatus 1 can generate an approximate problem including all of the plurality of dependent decision variables included in the dependent problem as two or more residual decision variables.

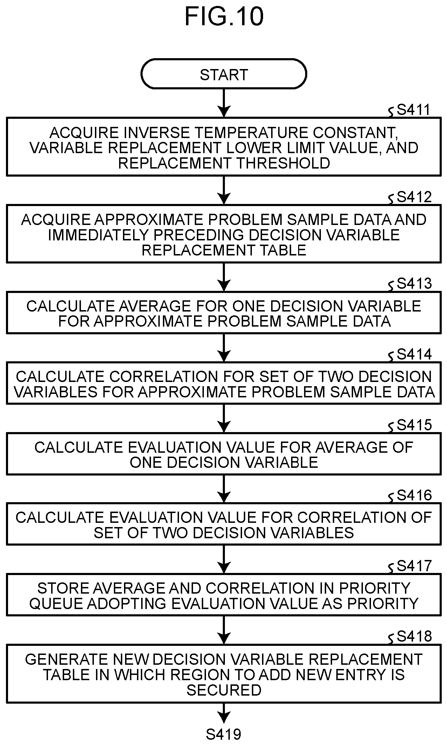

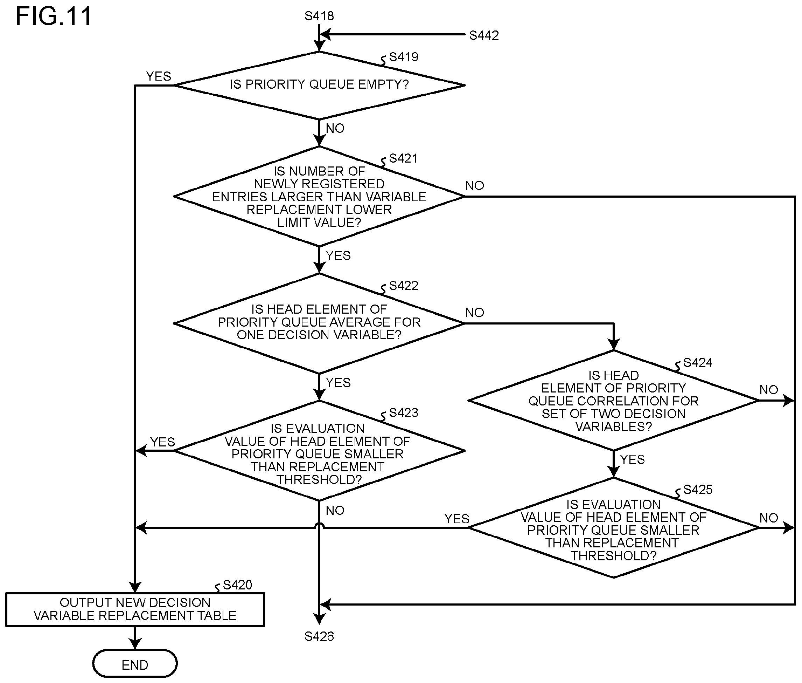

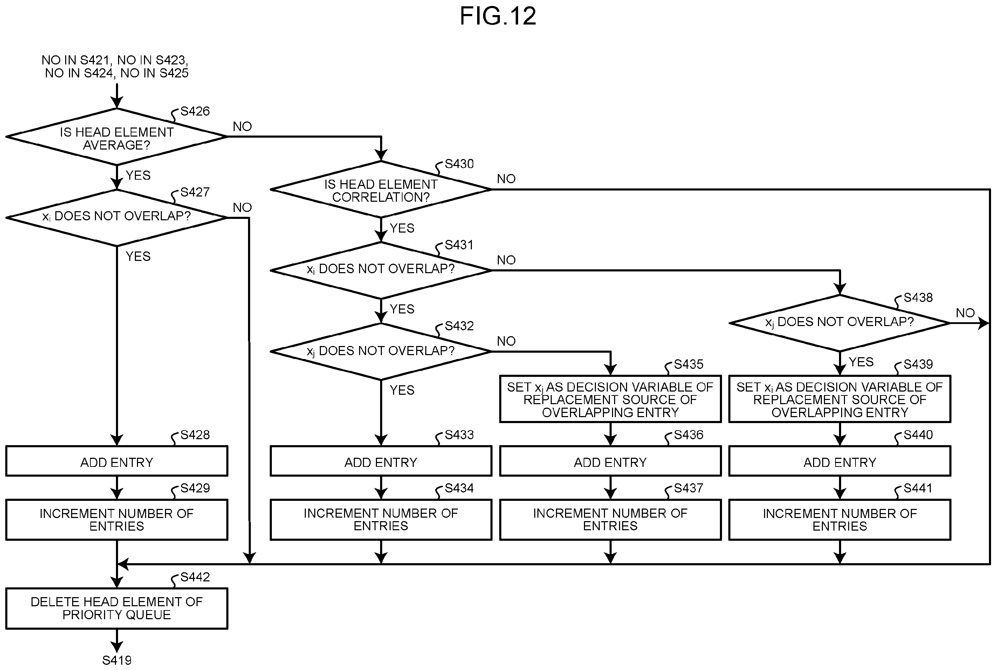

FIGS. 10, 11, and 12 are flowcharts illustrating a processing flow of the central processing device 13 that has executed the entry addition subprogram 1514 for the decision variable replacement table. FIG. 10 illustrates processing from S411 to S418. FIG. 11 illustrates processing from S419 to S425. FIG. 12 illustrates processing from S426 to S442.

The central processing device 13 executes the entry addition subprogram 1514 for the decision variable replacement table to execute the processes of S411 to S442 in FIGS. 10, 11, and 12. By executing the processing of S411 to S442, the central processing device 13 obtains a new decision variable replacement table 125(t) (ReplaceTable^{(t)}) in which entries are added to the immediately preceding decision variable replacement table 125(t-1) (ReplaceTable^{(t-1)}) by using the approximate problem sample data 1243(t) (SampleData^{approx,(t)}).

First, in S411, the central processing device 13 acquires the inverse temperature constant 1261 indicated by Formula (61), the variable replacement lower limit value 1263 indicated by Formula (62), and the replacement threshold 1264 indicated by Formula (63), which are included in the hyperparameter 126.
[Mathematical formula 61] $β ∈ ℝ , β > 0$ (61) [Mathematical formula 62] ${LowerLimit}^{replace} ∈ ℤ , {LowerLimit}^{replace} \geq 1$ (62) [Mathematical formula 63] ${θ}^{replace} ∈ ℝ , {θ}^{replace} > 0$ (63)

Note that, in a case where the sampler 14 performs random sampling, P(x), which is an occurrence probability for the sample (x), is uniform. Note that P(x) is expressed as Formula (64).
[Mathematical formula 64] $P \left(x\right) ∝ 1$ (64)

Therefore, when obtaining the average for one decision variable and correlation for the set of two decision variables, the central processing device 13 sets the weighting coefficient (W(x)) for the sample (x) as in Formula (65) by using the inverse temperature constant 1261.
[Mathematical formula 65] $W \left(x\right) ∝ exp \left(-β⋅E\left(x\right)\right)$ (65)

In addition, in a case where the sampler 14 performs Boltzmann sampling, the occurrence probability P(x) of the value (E(x)) of the objective function for the sample (x) is weighted as indicated in Formula (66) using the inverse temperature constant 1261.
[Mathematical formula 66] $P \left(x\right) ∝ exp \left(-β⋅E\left(x\right)\right)$ (66)

Therefore, when obtaining the average for one decision variable and correlation for the set of two decision variables, the sampler 14 uniformly sets the weighting coefficient (W(x)) for the sample (x) as indicated in Formula (67).
[Mathematical formula 67] $W \left(x\right) ∝ 1$ (67)

Subsequently, in S412, the central processing device 13 acquires the approximate problem sample data 1243(t) (SampleData^{approx,(t)}) and the immediately preceding decision variable replacement table 125(t) (ReplaceTable^{(t-1)}).

Subsequently, in S413, the central processing device 13 performs weighted statistical processing using the inverse temperature constant 1261 on the approximate problem sample data 1243(t) (SampleData^{approx,(t)}), and calculates an average for one decision variable indicated in Formula (68).
[Mathematical formula 68] $\begin{matrix}\overline{{x}_{i}} \\ for ∀ i ∈ Inde {x}^{approx , \left(t\right)}\end{matrix}$ (68)

Subsequently, in S414, the central processing device 13 performs weighted statistical processing using the inverse temperature constant 1261 on the approximate problem sample data 1243(t) (SampleData^{approx,(t)}), and calculates a correlation for a set of two decision variables indicated in Formula (69).
[Mathematical formula 69] $\begin{matrix}\overline{{x}_{i} ⋅ {x}_{j}} \\ for ∀ i ∈ {Index}^{approx , \left(t\right)} , ∀ j ∈ {Index}^{approx , \left(t\right)} , i > j\end{matrix}$ (69)

Subsequently, in S415, the central processing device 13 calculates an evaluation value (Scoreᵢ^{approx,(t)}) indicated in Formula (71) with respect to the average for one decision variable indicated in Formula (70).
[Mathematical formula 70] $\begin{matrix}\overline{{x}_{i}} \\ for ∀ i ∈ Inde {x}^{approx , \left(t\right)}\end{matrix}$ (70) [Mathematical formula 71] $\begin{matrix}{Score}_{i}^{approx , \left(t\right)} \\ for ∀ i ∈ {Index}^{approx , \left(t\right)}\end{matrix}$ (71)

For example, the central processing device 13 calculates the evaluation value (Scoreⱼ^{approx,(t)}) as indicated in Formula (72).
[Mathematical formula 72] $\begin{matrix}Scor {e}_{i}^{approx , \left(t\right)} = \left|\overline{{x}_{i}}\right| \\ for ∀ i ∈ Inde {x}^{approx , \left(t\right)}\end{matrix}$ (72)

Subsequently, in S416, the central processing device 13 calculates an evaluation value (Score_{i,j}^{approx,(t)}) indicated in Formula (74) for the correlation of the set of two decision variables indicated in Formula (73).
[Mathematical formula 73] $\begin{matrix}\overline{{x}_{i} ⋅ {x}_{j}} \\ for ∀ i ∈ {Index}^{approx , \left(t\right)} , ∀ j ∈ {Index}^{approx , \left(t\right)} , i > j\end{matrix}$ (73) [Mathematical formula 74] $\begin{matrix}{Score}_{i , j}^{approx , \left(t\right)} \\ for ∀ i ∈ {Index}^{approx , \left(t\right)} , ∀ j ∈ {Index}^{approx , \left(t\right)} , i > j\end{matrix}$ (74)

For example, the central processing device 13 calculates the evaluation value (Score_{i,j}^{approx, (t)}) as indicated in Formula (75).
[Mathematical formula 75] $\begin{matrix}{Score}_{i , j}^{approx , \left(t\right)} = \left|\overline{{x}_{i , j}}\right| \\ for ∀ i ∈ {Index}^{approx , \left(t\right)} ∀ j ∈ {Index}^{approx , \left(t\right)} , i > j\end{matrix}$ (75)

Furthermore, the central processing device 13 may adjust a relative value between the evaluation value of the correlation for the set of two decision variables and the evaluation value of average for one decision variable.

Subsequently, in S417, the central processing device 13 stores the average for one decision variable and the correlation for a set of two decision variables in the priority queue adopting the evaluation value as the priority.

Here, the central processing device 13 can perform operations of storing elements (storing all at once at the beginning), referring to the head element, and deleting the head element on the priority queue. Therefore, the central processing device 13 can execute reference to the head element and deletion of the head element while partially sorting the elements in the priority order by using the heap queue instead of first sorting all the elements in the priority order. As a result, the central processing device 13 can reduce the amount of calculation.

Subsequently, in S418, the central processing device 13 generates a table in which a region to add a new entry is secured for the immediately preceding decision variable replacement table 125(t-1) (ReplaceTable^{(t-1)}) as a new decision variable replacement table 125(t) (ReplaceTable^{(t)}).

Subsequently, in S419, the central processing device 13 determines whether the priority queue is empty. When the priority queue is empty (Yes in S419), the central processing device 13 advances the processing to S420. When the priority queue is not empty (No in S419), the central processing device 13 advances the processing to S421. By making the determination in S419, the central processing device 13 can repeat the processing from S421 to S442 until the priority queue becomes empty.

In S421, the central processing device 13 determines whether or not the number of entries newly registered in the new decision variable replacement table 125(t) is larger than the variable replacement lower limit value 1263 as indicated in Formula (76).
[Mathematical formula 76] ${Size}^{\left(t\right)} - {Size}^{\left(t-1\right)} \geq {LowerLimit}^{replace}$ (76)

When the number of entries newly registered in the new decision variable replacement table 125(t) is larger than the variable replacement lower limit value 1263 (Yes in S421), the central processing device 13 advances the processing to S422. When the number of entries newly registered in the new decision variable replacement table 125(t) is not larger than the variable replacement lower limit value 1263 (No in S421), the central processing device 13 advances the processing to S426.

In S422, the central processing device 13 determines whether the head element of the priority queue is an average for one decision variable. When the head element of the priority queue is an average for one decision variable (Yes in S422), the central processing device 13 advances the processing to S423. When the head element of the priority queue is not the average for one decision variable (No in S422), the central processing device 13 advances the processing to S424.

In S423, the central processing device 13 determines whether or not the evaluation value of the head element of the priority queue is smaller than the replacement threshold 1264, as indicated in Formula (77). [Mathematical formula 77] ${θ}^{replace} > {Score}_{i}^{approx , \left(t\right)}$ (77)

When the evaluation value of the head element of the priority queue is smaller than the replacement threshold 1264 (Yes in S423), the central processing device 13 exits the repetitive processing from S421 to S442 and advances the processing to S420. When the evaluation value of the head element of the priority queue is not smaller than the replacement threshold 1264 (No in S423), the central processing device 13 advances the processing to S426.

In S424, the central processing device 13 determines whether or not the head element of the priority queue is a correlation for the set of two decision variables. When the head element of the priority queue is a correlation for the set of two decision variables (Yes in S424), the central processing device 13 advances the processing to S425. When the head element of the priority queue is not the correlation for the set of two decision variables (No in S424), the central processing device 13 advances the processing to S426.

In S425, the central processing device 13 determines whether or not the evaluation value of the head element of the priority queue is smaller than the replacement threshold 1264, as indicated in Formula (78). [Mathematical formula 78] ${θ}^{replace} > {Score}_{i , j}^{approx , \left(t\right)}$ (78)

When the evaluation value of the head element of the priority queue is smaller than the replacement threshold 1264 (Yes in S425), the central processing device 13 exits the repetitive processing from S421 to S442 and advances the processing to S420. When the evaluation value of the head element of the priority queue is not smaller than the replacement threshold 1264 (No in S425), the central processing device 13 advances the processing to S426.

In S426, the central processing device 13 determines whether the head element of the priority queue is an average for one decision variable. When the head element of the priority queue is an average for one decision variable (Yes in S426), the central processing device 13 advances the processing to S427. When the head element of the priority queue is not the average for one decision variable (No in S426), the central processing device 13 advances the processing to S430.

In S427, the central processing device 13 determines whether or not the decision variable (xᵢ) of the head element of the priority queue does not overlap with the decision variable (Address_{IdExisting}) as the replacement-source of the existing entry, as indicated in Formula (79). [Mathematical formula 79] $\begin{matrix}{x}_{i} \neq Addres {s}_{IdExisting} \\ for 1 \leq ∀ IdExisting \leq Siz {e}^{\left(t\right)}\end{matrix}$ (79)

When the decision variable (xᵢ) of the head element of the priority queue does not overlap with the decision variable (Address_{IdExisting}) as the replacement-source of the existing entry (Yes in S427), the central processing device 13 advances the processing to S428. When the decision variable (xᵢ) of the head element of the priority queue overlaps with the decision variable (Address_{IdExisting}) as the replacement-source of the existing entry (No in S427), the central processing device 13 advances the processing to S442.

In S428, the central processing device 13 adds an entry including a serial number (Id_{ToAppend}), a decision variable (Address_{IdToAppend}) as the replacement-source, and a replacement value (Value_{IdToAppend}) to the new decision variable replacement table 125(t) (ReplaceTable^{(t)}).

The serial number (Id_{ToAppend}) is expressed as Formula (80).
[Mathematical formula 80] $IdToAppend = {Size}^{\left(t\right)} + 1$ (80)

The decision variable (Address_{IdToAppend}) as the replacement-source is expressed by Formula (81).
[Mathematical formula 81] ${Address}_{IdToAppend} = {x}_{i}$ (81)

The replacement value (Value_{IdToAppend}) is expressed as Formula (82).
[Mathematical formula 82] $\begin{matrix}{Value}_{IdToAppend} = + 1 \\ if \overline{{x}_{i}} \geq 0 \\ {Value}_{IdToAppend} = - 1 \\ if \overline{{x}_{i}} < 0\end{matrix}$ (82)

Subsequently, in S429, the central processing device 13 increments the number of entries (Size^{(t)}) in the new decision variable replacement table 125(t) by 1 as indicated in Formula (83) and updates the table.
[Mathematical formula 83] ${Size}^{\left(t\right)} : = {Size}^{\left(t\right)} + 1$ (83)

When completing S429, the central processing device 13 advances the processing to S442.

In S430, the central processing device 13 determines whether or not the head element of the priority queue is a correlation for the set of two decision variables. When the head element of the priority queue is a correlation for the set of two decision variables (Yes in S430), the central processing device 13 advances the processing to S431. When the head element of the priority queue is not the correlation for the set of two decision variables (No in S430), the central processing device 13 advances the processing to S442.

In S431, the central processing device 13 determines whether or not the decision variable (xᵢ) of the head element of the priority queue does not overlap with the decision variable (Address_{IdExisting}) as the replacement-source of the existing entry, as indicated in Formula (84). [Mathematical formula 84] $\begin{matrix}{x}_{i} \neq {Address}_{IdExisting} \\ for 1 \leq ∀ IdExisting \leq {Size}^{\left(t\right)}\end{matrix}$ (84)

When the decision variable (xᵢ) of the head element of the priority queue does not overlap with the decision variable (Address_{IdExisting}) as the replacement-source of the existing entry (Yes in S431), the central processing device 13 advances the processing to S432. When the decision variable (xᵢ) of the head element of the priority queue overlaps with the decision variable (Address_{IdExisting}) as the replacement-source of the existing entry (No in S431), the central processing device 13 advances the processing to S438.

In S432, the central processing device 13 determines whether or not the decision variable (xⱼ) of the head element of the priority queue does not overlap with the decision variable (Address_{IdExisting}) as the replacement-source of the existing entry, as indicated in Formula (85). [Mathematical formula 85] $\begin{matrix}{x}_{j} \neq {Address}_{IdExisting} \\ for 1 \leq ∀ IdExisting \leq {Size}^{\left(t\right)}\end{matrix}$ (85)

When the decision variable (xⱼ) of the head element of the priority queue does not overlap with the decision variable (Address_{IdExisting}) as the replacement-source of the existing entry (Yes in S432), the central processing device 13 advances the processing to S433. When the decision variable (xⱼ) of the head element of the priority queue overlaps with the decision variable (Address_{IdExisting}) as the replacement-source of the existing entry (No in S432), the central processing device 13 advances the processing to S435.

In S433, the central processing device 13 adds an entry including a serial number (Id_{ToAppend}), a decision variable of a replacement-source (Address_{IdToAppend}), and a replacement value (Value_{IdToAppend}) to the new decision variable replacement table 125(t) (ReplaceTable^{(t)}).

The serial number (Id_{ToAppend}) is expressed as Formula (86).
[Mathematical formula 86] $IdToAppend = {Size}^{\left(t\right)} + 1$ (86)

The decision variable (Address_{IdToAppend}) as the replacement-source is expressed by Formula (87).
[Mathematical formula 87] ${Address}_{IdToAppend} = {x}_{i}$ (87)

The replacement value (Value_{IdToAppend}) is expressed as Formula (88).
[Mathematical formula 88] $\begin{matrix}{Value}_{IdToAppend} = + {x}_{j} \\ if \overline{{x}_{i} ⋅ {x}_{j}} \geq 0 \\ {Value}_{IdToAppend} = - {x}_{j} \\ if \overline{{x}_{i} ⋅ {x}_{j}} < 0\end{matrix}$ (88)

Subsequently, in S434, the central processing device 13 increments the number of entries (Size^{(t)}) in the new decision variable replacement table 125(t) by 1 as indicated in Formula (89) and updates the table.
[Mathematical formula 89] ${Size}^{\left(t\right)} : = {Size}^{\left(t\right)} + 1$ (89)

When completing S434, the central processing device 13 advances the processing to S442.

In S435, the central processing device 13 sets the decision variable (xⱼ) as the decision variable (Address_{IdForJ}) that is the replacement-source of the entry overlapping with the decision variable (xⱼ) as expressed in Formula (90).
[Mathematical formula 90] $\begin{matrix}{x}_{i} = {Address}_{IdForI} \\ for 1 \leq ∃ IdForI \leq {Size}^{\left(t\right)}\end{matrix}$ (90)

The central processing device 13 utilizes the constraint indicated in Formula (91) defined in the decision variable replacement table schema 153 (ReplaceTable), and the duplication occurs only once at the maximum.
[Mathematical formula 91] $\begin{matrix}{Address}_{Id} \neq {Address}_{Id ′} \\ for 1 \leq Id ′ < Id\end{matrix}$ (91)

Subsequently, in S436, the central processing device 13 adds an entry including a serial number (Id_{ToAppend}), a decision variable of a replacement-source (Address_{IdToAppend}), and a replacement value (Value_{IdToAppend}) to the new decision variable replacement table 125(t) (ReplaceTable^{(t)}).

The serial number (Id_{ToAppend}) is expressed as Formula (92).
[Mathematical formula 92] $IdToAppend = {Size}^{\left(t\right)} + 1$ (92)

The decision variable (Address_{IdToAppend}) as the replacement-source is expressed by Formula (93).
[Mathematical formula 93] ${Address}_{IdToAppend} = {x}_{i}$ (93)

The replacement value (Value_{IdToAppend}) is expressed as Formula (94).
[Mathematical formula 94] $\begin{matrix}{Value}_{IdToAppend} = + {Value}_{IdForI} \\ if \overline{{x}_{i} ⋅ {x}_{j}} \geq 0 \\ {Value}_{IdToAppend} = - {Value}_{IdForI} \\ if \overline{{x}_{i} ⋅ {x}_{j}} < 0\end{matrix}$ (94)

Subsequently, in S437, the central processing device 13 increments the number of entries (Size^{(t)}) in the new decision variable replacement table 125(t) by 1 as indicated in Formula (95) and updates the table.
[Mathematical formula 95] ${Size}^{\left(t\right)} : = {Size}^{\left(t\right)} + 1$ (95)

When completing S437, the central processing device 13 advances the processing to S442.

In S438, the central processing device 13 determines whether or not the decision variable (xⱼ) of the head element of the priority queue does not overlap with the decision variable (Address_{Id'}) as the replacement-source of the existing entry, as indicated in Formula (96).
[Mathematical formula 96] $\begin{matrix}{x}_{j} \neq {Address}_{Id ′} \\ for 1 \leq Id ′ \leq {Size}^{\left(t\right)}\end{matrix}$ (96)

When the decision variable (xⱼ) of the head element of the priority queue does not overlap with the decision variable (Address_{Id'}) as the replacement-source of the existing entry (Yes in S438), the central processing device 13 causes the processing to proceed to S439. When the decision variable (xⱼ) of the head element of the priority queue overlaps with the decision variable (Address_{Id'}) of the replacement-source of the existing entry (No in S438), the central processing device 13 advances the processing to S442.

In S439, the central processing device 13 sets the decision variable (xᵢ) as the decision variable (Address_{IdForJ}) that is the replacement-source of the entry overlapping with the decision variable (xᵢ) as expressed in Formula (97).
[Mathematical formula 97] $\begin{matrix}{x}_{i} = {Address}_{IdForI} \\ for 1 \leq ∃ IdForI \leq {Size}^{\left(t\right)}\end{matrix}$ (97)

The central processing device 13 utilizes the constraint indicated in Formula (98) defined in the decision variable replacement table schema 153 (ReplaceTable), and the duplication occurs only once at the maximum.
[Mathematical formula 98] $\begin{matrix}{Address}_{Id} \neq {Address}_{Id ′} \\ for 1 \leq Id ′ < Id\end{matrix}$ (98)

Subsequently, in S440, the central processing device 13 adds an entry including a serial number (Id_{ToAppend}), a decision variable of a replacement-source (Address_{IdToAppend}), and a replacement value (Value_{IdToAppend}) to the new decision variable replacement table 125(t) (ReplaceTable ^{(t)}) .

The serial number (Id_{ToAppend}) is expressed as Formula (99).
[Mathematical formula 99] $IdToAppend = {Size}^{\left(t\right)} + 1$ (99)

The decision variable (Address_{IdToAppend}) as the replacement-source is expressed by Formula (100).
[Mathematical formula 100] ${Adress}_{IdToAppend} = {x}_{j}$ (100)

The replacement value (Value_{IdTOAppend}) is expressed as Formula (101).
[Mathematical formula 101] $\begin{matrix}{Value}_{IdToAppend} = + {Value}_{IdForI} \\ if \overline{{x}_{i} ⋅ {x}_{j}} \geq 0 \\ {Value}_{IdToAppend} = - {Value}_{IdForI} \\ if \overline{{x}_{i} ⋅ {x}_{j}} < 0\end{matrix}$ (101)

Subsequently, in S441, the central processing device 13 increments the number of entries (Size^{(t)}) in the new decision variable replacement table 125(t) by 1 as indicated in Formula (102) and updates the table.
[Mathematical formula 102] ${Size}^{\left(t\right)} : = {Size}^{\left(t\right)} + 1$ (102)

When completing S441, the central processing device 13 advances the processing to S442.

In S442, the central processing device 13 deletes the head element of the priority queue. When the process of S442 is completed, the central processing device 13 returns the process to S419.

Then, the central processing device 13 repeats the processing from S421 to S442 until the priority queue becomes empty, and when the priority queue becomes empty (Yes in S419), the processing proceeds to S420.

Finally, in S420, the central processing device 13 outputs a new decision variable replacement table 125(t) (ReplaceTable^{(t)}). After outputting, the central processing device 13 may delete the approximate problem sample data 1243(t) (SampleData^{approx,(t)}).

By executing the above processing, the problem solving apparatus 1 can obtain a new decision variable replacement table 125(t) (ReplaceTable^{(t)}) in which entries are added to the immediately preceding decision variable replacement table 125(t-1) (ReplaceTable^{(t-1)}) by using the approximate problem sample data 1243(t) (SampleData^{approx,(t)}).

That is, by executing the processing of S411 to S442, the problem solving apparatus 1 can determine the value by performing the statistical processing for each of the two or more residual decision variables based on the plurality of solutions to the approximate problem. Then, the problem solving apparatus 1 can perform a new registration processing of newly registering a value determined by performing statistical processing for each of one or more decision variables corresponding to a part or all of the two or more residual decision variables in the decision variable replacement table.

For example, by executing the processing of S413 and S415, the problem solving apparatus 1 can calculate an average value for each of the two or more residual decision variables based on the plurality of solutions to the approximate problem, and calculate an evaluation value corresponding to the calculated average value. Further, by executing the processing of S414 and S416, the problem solving apparatus 1 can calculate a correlation value representing a correlation for each of the plurality of variable sets included in the two or more residual decision variables based on the plurality of solutions to the approximate problem, and calculate an evaluation value corresponding to the calculated correlation value. By executing the processing of S413 to S416, the problem solving apparatus 1 can generate an evaluation value by which the average value and the correlation value can be determined on the same basis.

Subsequently, by executing the process of S417, the problem solving apparatus 1 can store a plurality of elements in the priority queue. Each of the plurality of elements stored in the priority queue includes any one of the two or more residual decision variables or any one of the plurality of variable sets together with the evaluation value.

Subsequently, by executing the processing of S419 to S441, the problem solving apparatus 1 can newly register an entry corresponding to one head element having the largest evaluation value among the plurality of elements stored in the priority queue in the decision variable replacement table on condition of not overlapping with the already registered entry. Note that the entry corresponding to the head element newly registered by the processing of S419 to S441 includes a serial number representing later than the entry already registered in the decision variable replacement table.

Subsequently, by executing the process of S442, the problem solving apparatus 1 can delete the head element from the priority queue. Then, the problem solving apparatus 1 can repeat the process of newly registering the entry corresponding to the head element in the priority queue in the decision variable replacement table on condition of not overlapping with the already-registered entry (S428, S433, S436, and S440) and the process of deleting the head element from the priority queue (S442) until the predetermined end condition is reached. Note that the end condition is, for example, that the priority queue becomes empty (S419), that the number of newly registered entries is larger than a predetermined variable replacement lower limit value (S421), or that the evaluation value of the head element is smaller than a predetermined replacement threshold (S423, S425).

More specifically, when any target residual decision variable among two or more residual decision variables is included in the head element, the problem solving apparatus 1 executes S427 to S429 and S442.

By executing S427 to S429 and S442, when the target residual decision variable does not overlap with any replacement-source decision variable included in the decision variable replacement table, the problem solving apparatus 1 can newly register the first entry, which is an example of the entry, in the decision variable replacement table (S428) and delete the head element from the priority queue (S442). The first entry includes the target residual decision variable as the replacement-source decision variable. In addition, the first entry includes a value obtained by binarizing the average value for the target residual decision variables to the first value or the second value as the replacement value.

When the target residual decision variable overlaps with any replacement-source decision variable included in the decision variable replacement table by executing the processing in S427 and S442, the problem solving apparatus 1 can delete the head element from the priority queue without newly registering the entry in the decision variable replacement table (No in S427) (S442).

When any target variable set among the plurality of variable sets is included in the head element, the problem solving apparatus 1 executes S431 to S441 and S442. The target variable set represents a set of the first residual decision variable and the second residual decision variable among the two or more residual decision variables.

By executing S431 to S441 and S442, when the first residual decision variable does not overlap with any replacement-source decision variable included in the decision variable replacement table and the second residual decision variable does not overlap with any replacement-source decision variable included in the decision variable replacement table, the problem solving apparatus 1 can newly register the second entry, which is an example of the entry, in the decision variable replacement table (S433 and S440) and delete the head element from the priority queue (S442). The second entry includes the first residual decision variable as the replacement-source decision variable. In addition, the second entry includes, as the replacement value, the second residual decision variable multiplied by a sign obtained by encoding the correlation value for the target variable set into the non-inverted sign or the inverted sign.

By executing S431 to S441 and S442, when the first residual decision variable does not overlap with any replacement-source decision variable included in the decision variable replacement table and the second residual decision variable overlaps with any replacement-source decision variable included in the decision variable replacement table, the problem solving apparatus 1 can newly register the third entry, which is an example of the entry, in the decision variable replacement table (S436) and delete the head element from the priority queue (S442). The third entry includes the first residual decision variable as the replacement-source decision variable. In addition, the third entry includes a first calculated value as the replacement value. The first calculated value is a value obtained by multiplying the replacement value included in the entry including the second residual decision variable in the decision variable replacement table as the replacement-source decision variable by the sign obtained by encoding the correlation value for the target variable set into the non-inverted sign or the inverted sign.

By executing the processes of S431, S438, and S442, the problem solving apparatus 1 can delete the head element from the priority queue without newly registering the entry in the decision variable replacement table (No in S438) when the first residual decision variable overlaps with any replacement-source decision variable included in the decision variable replacement table and the second residual decision variable overlaps with any replacement-source decision variable included in the decision variable replacement table (S442).

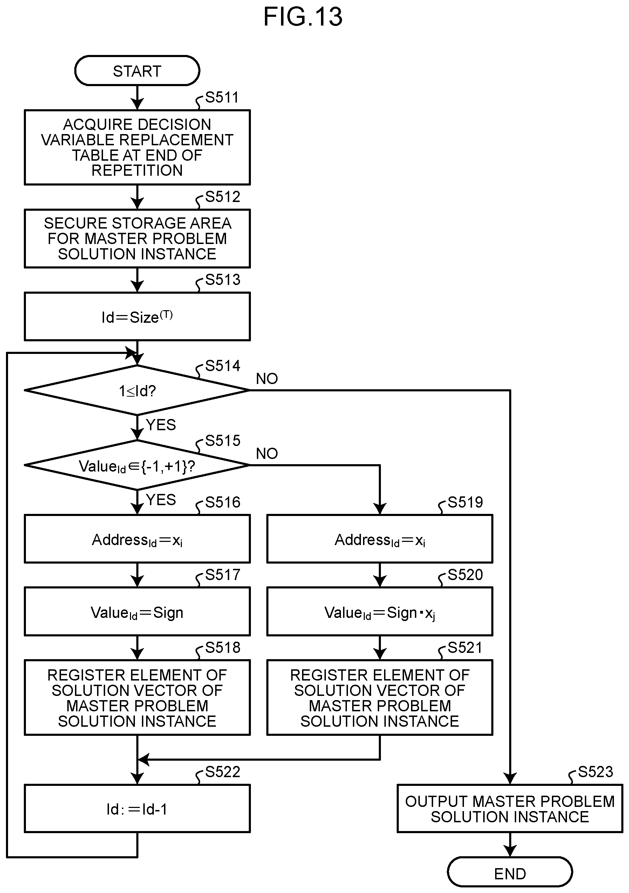

FIG. 13 is a flowchart illustrating a processing flow of the central processing device 13 that has executed the derivation subprogram 1515 for the master problem solution instance.

The central processing device 13 executes the derivation subprogram 1515 for the master problem solution instance to execute the processing of S511 to S523 in FIG. 13. By executing the processing of S511 to S523, the central processing device 13 derives the master problem solution instance 1212 (IsingSolution^{main}) by using the decision variable replacement table 125(T) (Replace^{Table(T)}) at the end of repetition.

First, in S511, the central processing device 13 acquires a decision variable replacement table 125(T) (ReplaceTable^{(T)}) at the end of repetition.

Subsequently, in S512, the central processing device 13 secures a storage area for the master problem solution instance 1212 (IsingSolution^{main}).

Subsequently, in S513, the central processing device 13 substitutes the number of entries in the decision variable replacement table 125(T) at the end of repetition for Id as indicated in Formula (103).
[Mathematical formula 103] $Id = {Size}^{\left(T\right)}$ (103)

As a result, the central processing device 13 can process the entries in the decision variable replacement table 125(T) (ReplaceTable^{(T)}) at the end of the repetition in the reverse order.

Subsequently, in S514, the central processing device 13 determines whether Id is 1 or more. When Id is not 1 or more (No in S514), the central processing device 13 advances the processing to S523. When Id is 1 or more (Yes in S514), the central processing device 13 advances the processing to S515. As a result, the central processing device 13 processes the entries in the decision variable replacement table 125(T) (ReplaceTable^{(T)}) in the reverse order, and when the processes in S515 to S522 are completed for all the entries in the decision variable replacement table 125(T) (ReplaceTable^{(T)}), the process can proceed to S523.

In S515, the central processing device 13 determines whether or not the replacement value (Value_{Id}) satisfies Formula (104).
[Mathematical formula 104] $Valu {e}_{ID} ∈ \left\{-1,+1\right\}$ (104)

When the replacement value (Value_{Id}) satisfies Formula (104) (Yes in S515), the central processing device 13 advances the processing to S516. When the replacement value (Value_{Id}) does not satisfy Formula (104) (No in S515), the central processing device 13 advances the processing to S519.

In S516, the central processing device 13 sets the decision variable (Address^{Id}) as the replacement-source to xᵢ.

Subsequently, in S517, the central processing device 13 sets the replacement value (Value_{Id}) as Sign.

Subsequently, in S518, the central processing device 13 registers elements of the solution vector of the master problem solution instance 1212 as expressed in Formula (105).
[Mathematical formula 105] ${\hat{x}}_{i}^{main} : = Sign$ (104)

When completing S518, the central processing device 13 advances the processing to S522.

In S519, the central processing device 13 sets the decision variable (Address^{Id}) as the replacement-source to xᵢ.

Subsequently, in S520, the central processing device 13 sets the replacement value (Value_{Id}) as Sign·xᵢ.

Subsequently, in S521, the central processing device 13 registers elements of the solution vector of the master problem solution instance 1212 as expressed in Formula (106).
[Mathematical formula 106] ${\hat{x}}_{i}^{main} : = Sign ⋅ {\hat{x}}_{j}^{main}$ (106)

Note that the element of the solution vector expressed by Formula (107) is guaranteed to be already registered for the following reasons (1) and (2).
[Mathematical formula 107] ${\hat{x}}_{j}^{main}$ (107)

(1) The end condition of the preceding stage is a condition indicated in Formula (108).
[Mathematical formula 108] ${Size}^{\left(t\right)} < \left|{Index}^{main}\right|$ (108)

(2) The constraint indicated in Formula (109) is defined in the decision variable replacement table schema 153.
[Mathematical formula 109] $\begin{matrix}{Address}_{Id} \neq {Address}_{Id ′} \\ for 1 \leq ∀ Id ′ < Id\end{matrix}$ (109)

However, as indicated in Formula (110), the replacement value does not include the registered decision variable as the decision variable of the replacement-source.
[Mathematical formula 110] $\begin{matrix}Valu {e}_{Id} ∉ \left\{-Addres{s}_{Id ′},+Addres{s}_{Id ′}\right\} \\ for 1 \leq ∀ Id ′ < Id\end{matrix}$ (110)

When completing S521, the central processing device 13 advances the processing to S522.

In S522, the central processing device 13 subtracts 1 from Id and updates the Id as indicated in Formula (111).
[Mathematical formula 111] $Id : = Id - 1$ (111)

When completing S522, the central processing device 13 returns the processing to S514.

Then, the central processing device 13 repeats the processing from S515 to S522 until Id becomes smaller than 1, that is, until the processing is completed for all the entries in the decision variable replacement table 125(T).

In S523, the central processing device 13 outputs a master problem solution instance 1212 (IsingSolution^{main}). After outputting, the central processing device 13 may delete all of the dependent problem instance 1221(T) (IsingProblem^{sub,(T)}) at the end of repetition and the decision variable replacement tables 125(0), (1),..., and (T).

By executing the above processing, the problem solving apparatus 1 can derive the master problem solution instance 1212 (IsingSolution^{main}) by using the decision variable replacement table 125(T) (Replace^{Table(T)}) at the end of repetition.

That is, by executing the processing of S511 to S523, when all the values of the plurality of decision variables included in the master problem are registered in the decision variable replacement table, the problem solving apparatus 1 can output the solution to the master problem based on all the values of the plurality of decision variables registered in the decision variable replacement table.

In this case, by executing the processing of S513 to S522, the problem solving apparatus 1 can trace the entries included in the decision variable replacement table in the reverse order of the serial numbers from the end to the head of the serial numbers, and determine the replacement-source decision variable among the plurality of decision variables based on the replacement value. By executing the process of S523, the problem solving apparatus 1 can output each of the values of the plurality of determined decision variables as the solutions to the master problem.

For example, by executing the processing of S515, S516, and S517, for each of the plurality of decision variables, when the replacement value is the first value, the problem solving apparatus 1 can set the value of the corresponding decision variable to the first value. In addition, by executing the processing of S515, S516, and S517, for each of the plurality of decision variables, when the replacement value is the second value, the problem solving apparatus 1 can set the value of the corresponding decision variable to the second value.

In addition, by executing the processing of S515, S519, and S520, the problem solving apparatus 1 can set the value of the corresponding decision variable to the value determined for the previously determined decision variable when the replacement value is the previously determined decision variable multiplied by the non-inverted sign. In addition, by executing the processing of S515, S519, and S520, when the replacement value is the previously determined decision variable multiplied by the inverted sign, the problem solving apparatus 1 can set the value of the corresponding decision variable to a value obtained by inverting the value determined for the previously determined decision variable.

The problem solving apparatus 1 according to the first embodiment as described above repeats processing of dividing each of the plurality of decision variables included in the network optimization problem into a decision variable having a large influence and a decision variable having a small influence, replacing the decision variable having the small influence with an estimated value, performing sampling and statistical processing on the decision variable having the large influence, and replacing the decision variable having a strong statistical bias with a value based on the statistical bias. As a result, even when the network represented by the network optimization problem does not have a natural total order or partial order and does not have a cluster structure, the problem solving apparatus 1 can extract a subproblem structure from the network optimization problem and calculate an accurate solution in a short time.

Therefore, according to the problem solving apparatus 1 according to the first embodiment as described above, it is possible to accurately calculate a solution of an optimization problem including a huge number of variables in a short time.

Note that the program executed by the problem solving apparatus 1 according to the present embodiment may be provided by being recorded in a computer-readable recording medium such as a CD-ROM, a flexible disk (FD), a CD-R, or a digital versatile disk (DVD) as a file in an installable format or an executable format.

The program executed by the problem solving apparatus 1 according to the present embodiment may be stored in a computer connected to a network such as the Internet and provided by being downloaded via the network. The program executed by the problem solving apparatus 1 according to the present embodiment may be provided or distributed via a network such as the Internet. The program executed by the problem solving apparatus 1 according to the present embodiment may be provided by being incorporated in a ROM or the like in advance.

### (Second Embodiment)

Next, a problem solving apparatus 2 according to a second embodiment will be described.

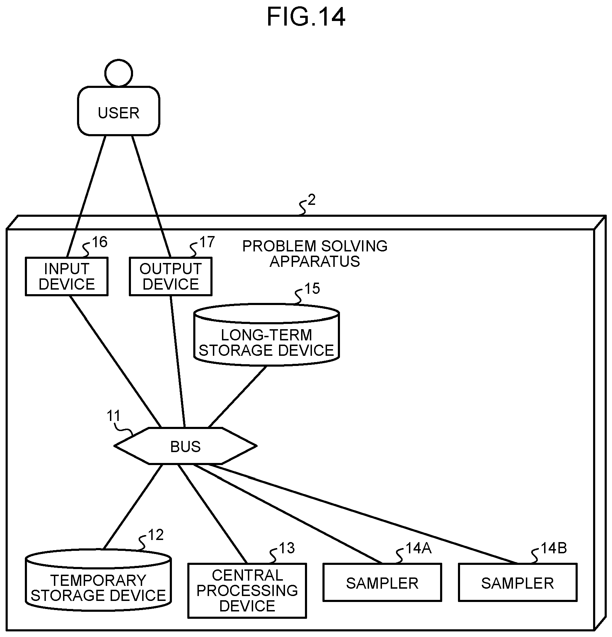

FIG. 14 is a diagram illustrating a functional configuration of the problem solving apparatus 2 according to the second embodiment.

The problem solving apparatus 2 according to the second embodiment is different from the problem solving apparatus 1 according to the first embodiment in that a sampler 14A and a sampler 14B are provided instead of the sampler 14. The problem solving apparatus 2 according to the second embodiment has the same configuration as the problem solving apparatus 1 according to the first embodiment except for the sampler 14A and the sampler 14B, and thus the description thereof will be omitted.

The sampler 14A and the sampler 14B have functions and configurations similar to those of the sampler 14 according to the first embodiment. Each of the sampler 14A and the sampler 14B solves the provided problem independently of each other. By giving a problem to each of the sampler 14A and the sampler 14B, the central processing device 13 can process the solving process in parallel to shorten the processing time. Note that the problem solving apparatus 2 according to the second embodiment may further include one or more samplers 14 in addition to the sampler 14A and the sampler 14B.

In addition to the effects of the problem solving apparatus 1 according to the first embodiment, the problem solving apparatus 2 according to the second embodiment can further calculate the solution to the optimization problem in a short time.

### (Third Embodiment)

Next, a problem solving system 3 according to a third embodiment will be described.

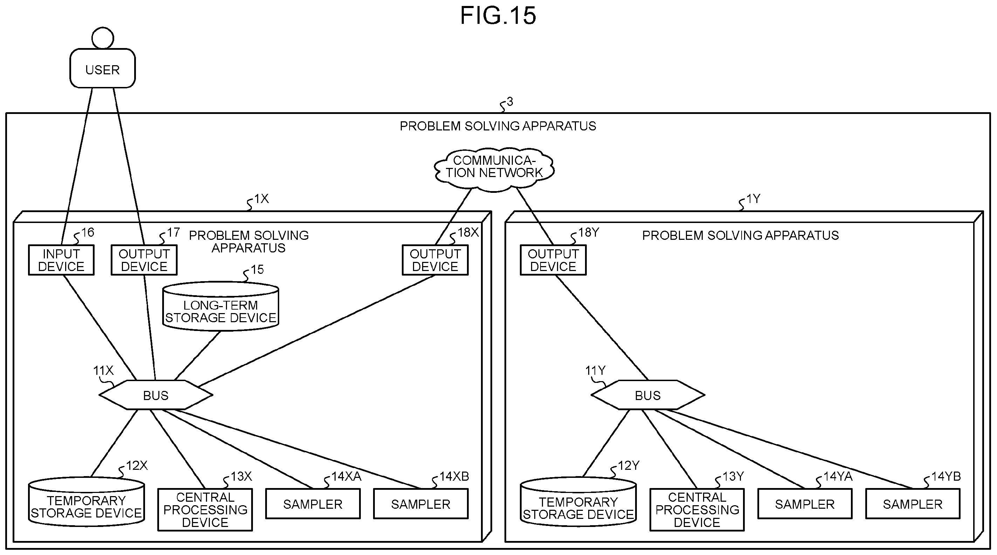

FIG. 15 is a diagram illustrating a functional configuration of the problem solving system 3 according to the third embodiment.

The problem solving system 3 according to the third embodiment includes a problem solving apparatus 1X and a problem solving apparatus 1Y.

The problem solving apparatus 1X includes a bus 11X, a temporary storage device 12X, a central processing device 13X, a sampler 14XA, a sampler 14XB, a long-term storage device 15, an input device 16, and an output device 17.

The temporary storage device 12X, the central processing device 13X, the sampler 14XA, the sampler 14XB, the long-term storage device 15, the input device 16, and the output device 17 have the same configuration and function as the temporary storage device 12, the central processing device 13, the sampler 14A, the sampler 14B, the long-term storage device 15, the input device 16, and the output device 17 according to the second embodiment. Therefore, the problem solving apparatus 1X has the same function, configuration, and effect as those of the problem solving apparatus 2 according to the second embodiment.

The problem solving apparatus 1X further includes an output device 18X. The output device 18X is connected to another device via a communication network. Therefore, the problem solving apparatus 1X can output the calculated solution of the optimization problem to another device via the communication network.

The problem solving apparatus 1Y includes a bus 11Y, a temporary storage device 12Y, a central processing device 13Y, a sampler 14YA, a sampler 14YB, an input device 16, an output device 17, and an output device 18Y. The temporary storage device 12Y, the central processing device 13Y, the sampler 14YA, and the sampler 14YB have the same configuration and function as the temporary storage device 12, the central processing device 13, the sampler 14A, and the sampler 14B according to the second embodiment. The output device 18Y is connected to another device via a communication network.

Such a problem solving apparatus 1Y has the same function, configuration, and effect as those of the problem solving apparatus 2 according to the second embodiment by acquiring information from another device on the communication network and using the storage device on the communication network instead of the long-term storage device 15. In addition, such a problem solving apparatus 1Y can output the calculated solution of the optimization problem to another device via a communication network. In addition, the problem solving apparatus 1X and the problem solving apparatus 1Y may perform a solving process using their resources via a communication network.

### (Example of instance and the like)

Next, an example of an instance and the like generated in each embodiment will be described.

For example, it is assumed that the master problem instance 1211 is, for example, Formula (112). [Mathematical formula 112] $\begin{matrix}E \left(x\right) = 2 {x}_{1} ⋅ {x}_{2} - 3 {x}_{2} ⋅ {x}_{4} - {x}_{1} - {x}_{2} + 4 {x}_{3} \\ subject to \\ {x}_{i} ϵ \left\{+1,-1\right\} for 1 \leq i \leq 4 \\ {x}_{1} + {x}_{2} \leq 0\end{matrix}$ (112)

In this case, the dependent problem instance 1221(1) at t=1 becomes Formula (113).
[Mathematical formula 113] $\begin{matrix}{E}_{sub , \left(1\right)} \left(x\right) = 2 {x}_{1} ⋅ {x}_{2} - 3 {x}_{2} ⋅ {x}_{4} - {x}_{1} - {x}_{2} + 4 {x}_{3} \\ subject to \\ {x}_{i} ϵ \left\{+1,-1\right\} for 1 \leq i \leq 4 \\ {x}_{1} + {x}_{2} \leq 0\end{matrix}$ (113)

In addition, the decision variable replacement table 125(0) at t=0 is an empty table as illustrated in Table 2.

**[Table 2]**

| Serial number Id | Replacement-source decision variable Adress_{Id} | Replacement value Value_{Id} |
|---|---|---|
| ... | ... | ... |

In this case, the relaxed problem instance 1231(1) at t=1 is given by Formula (114).
[Mathematical formula 114] $\begin{matrix}{E}_{relaxed , \left(1\right)} \left(x\right) = {x}_{1}^{2} + {x}_{2}^{2} + {x}_{3}^{2} + {x}_{4}^{2} - {x}_{1} - {x}_{2} + 4 {x}_{3} \\ subject to \\ - 1 \leq {x}_{i} \leq + 1 for 1 \leq i \leq 4 \\ {x}_{1} + {x}_{2} \leq 0\end{matrix}$ (114)

In this case, the relaxed problem solution instance 1232(1) at t=1 is as indicated in Table 3.

**[Table 3]**

| Decision variable | Value |
|---|---|
| X₁ | +0.5 |
| X₂ | +0.5 |
| X₃ | -1.0 |
| X₄ | +0.0 |

Furthermore, in this case, the approximate problem instance 1241(1) of t=1 is, for example, Formula (115).
[Mathematical formula 115] $\begin{matrix}E \left(x\right) = 2 ⋅ 0.5 ⋅ {x}_{2} - 3 {x}_{2} ⋅ {x}_{4} - 0.5 - {x}_{2} + 4 {x}_{3} \\ = - 3 {x}_{2} ⋅ {x}_{4} - 0.5 + 4 {x}_{3} \\ subject to \\ {x}_{i} ∈ \left\{+1,-1\right\} for 2 \leq i \leq 4 \\ {x}_{2} \leq 1\end{matrix}$ (115)

In this case, the approximate problem sample data 1243(1) of t=1 is as illustrated in Table 4.

**[Table 4]**

| Sample number | Decision variable | Value |
|---|---|---|
| 1 | X₂ | -1 |
| 1 | X₃ | -1 |
| 1 | X₄ | -1 |
| 2 | X₂ | +1 |
| 2 | X₃ | -1 |
| 2 | X₄ | +1 |

The decision variable replacement table 125(1) for t=1 is as illustrated in Table 5.

**[Table 5]**

| Serial number Id | Replacement-source decision variable Adress_{Id} | Replacement value Value_{Id} |
|---|---|---|
| 1 | X₃ | -1 |
| 2 | X₄ | X₂ |

The decision variable replacement table 125(2) for t=2 is as illustrated in Table 6.

**[Table 6]**

| Serial number Id | Replacement-source decision variable Adress_{Id} | Replacement value Value_{Id} |
|---|---|---|
| 1 | x₃ | -1 |
| 2 | x₄ | x₂ |
| 3 | x₂ | -x₁ |
| 4 | x₁ | -1 |

Then, for example, the master problem solution instance 1212 is as illustrated in Table 7.

**[Table 7]**

| Decision variable | Value |
|---|---|
| x₁ | -1 |
| x₂ | +1 |
| x₃ | -1 |
| x₄ | +1 |

### (Program and the like)

The sampling schema method program 151 executed by the problem solving apparatus 1 is provided by being recorded as a file in an installable format or an executable format in a computer-readable recording medium such as a CD-ROM, a flexible disk (FD), a CD-R, or a digital versatile disk (DVD).

In addition, the sampling schema method program 151 may be stored on a computer connected to a network such as the Internet and provided by being downloaded via the network. The sampling schema method program 151 may be provided or distributed via a network such as the Internet. Further, the sampling schema method program 151 may be provided by being incorporated in a ROM or the like in advance.

The problem solving apparatus 1 may be realized by a reconfigurable semiconductor device such as an FPGA. The problem solving apparatus 1 may be realized by a CPU, a microprocessor, a GPU, an ASIC, or an electronic circuit including these circuits. In addition, the problem solving apparatus 1 may be realized by an information processing device such as a computer, a computer system configured by a plurality of computers or servers communicating with each other via a network, a PC cluster in which a plurality of computers execute information processing in cooperation, or the like.

When the problem solving apparatus 1 is realized by a reconfigurable semiconductor device such as an FPGA, circuit information (configuration data) written in the reconfigurable semiconductor device may be stored in a computer connected to a network such as the Internet and provided by being downloaded via the network in order to operate the reconfigurable semiconductor device as the problem solving apparatus 1. In addition, circuit information (configuration data) written in the reconfigurable semiconductor device in order to operate the reconfigurable semiconductor device as the problem solving apparatus 1 may be recorded in a computer-readable recording medium and provided.

When the problem solving apparatus 1 is realized by a semiconductor device such as an ASIC, circuit information representing a configuration of a circuit described in a hardware description language may be stored in a computer connected to a network such as the Internet and provided by being downloaded via the network in order to operate the semiconductor device such as the ASIC as the problem solving apparatus 1. In addition, in order to operate a semiconductor device such as an ASIC as the problem solving apparatus 1, circuit information representing a configuration of a circuit described in a hardware description language may be recorded in a computer-readable recording medium and provided.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. A problem solving apparatus comprising:
a problem acquiring unit that acquires a master problem of minimizing an objective function including a plurality of decision variables under a constraint condition or without a constraint condition;
a dependent problem generating unit that generates a dependent problem including, as a plurality of dependent decision variables, two or more decision variables that are not registered as determined in a decision variable replacement table among the plurality of decision variables, in response to execution of new registration processing of newly registering a value of any decision variable among the plurality of decision variables in the decision variable replacement table in which a value of a determined decision variable among the plurality of decision variables is registered;
an approximate problem generating unit that generates, every time the dependent problem is generated, an approximate problem including a part or all of two or more dependent decision variables as two or more residual decision variables in descending order from a larger influence among the plurality of dependent decision variables;
a table update unit that executes the new registration processing of determining a value by performing statistical processing for each of the two or more residual decision variables based on a plurality of solutions to the approximate problem, and newly registering, in the decision variable replacement table, the value determined by performing the statistical processing for each of one or more decision variables corresponding to a part or all of the two or more residual decision variables; and
a solution output unit that outputs a solution to the master problem based on all values of the plurality of decision variables registered in the decision variable replacement table when all values of the plurality of decision variables included in the master problem are registered in the decision variable replacement table.

2. The problem solving apparatus according to claim 1, wherein
the objective function is a quadratic function,
the constraint condition is expressed by one or more linear constraint expressions including any decision variable among the plurality of decision variables, and
each of the plurality of decision variables is a binary variable representing a first value or a second value.

3. The problem solving apparatus according to claim 2, wherein
the dependent problem is a problem in which a decision variable registered as determined in the decision variable replacement table among the plurality of decision variables in the master problem is replaced with the value determined, and
the approximate problem is a problem in which a dependent decision variable excluding the two or more dependent decision variables among the plurality of dependent decision variables in the dependent problem is replaced with an estimated value.

4. The problem solving apparatus according to claim 3, further comprising:
a relaxed problem generating/solving unit, wherein
the relaxed problem generating/solving unit generates a plurality of continuous decision variables corresponding one-to-one to the plurality of dependent decision variables,
each of the plurality of continuous decision variables being a continuous variable, and
the relaxed problem generating/solving unit
generates a relaxed problem by replacing each of the plurality of dependent decision variables included in the dependent problem with a corresponding continuous decision variable among a plurality of continuous decision variables and converting an objective function of the dependent problem into a continuous convex quadratic function based on a predetermined rule, and
solves the relaxed problem.

5. The problem solving apparatus according to claim 4, wherein
the approximate problem generating unit
calculates, for each of the plurality of dependent decision variables, a weighting coefficient that is an absolute value of a value obtained by accumulating weight values set to a term including a corresponding decision variable among the plurality of decision variables in the master problem,
selects, from the plurality of dependent decision variables, the dependent decision variables the number of which corresponds to the number of sampling time variable upper limit values set in advance from the top of the weighting coefficient, and
generates the approximate problem including dependent decision variables the number of which corresponds to the number of the sampling-time variable upper limit values selected among the plurality of dependent decision variables as the two or more residual decision variables,
the approximate problem being a problem in which an unselected dependent decision variable among the plurality of dependent decision variables is replaced with the estimated value, and
the estimated value being a value of a continuous decision variable corresponding to an unselected dependent decision variable among respective values of the plurality of continuous decision variables included in the solution of the relaxed problem.

6. The problem solving apparatus according to claim 5, wherein
the approximate problem generating unit
generates, when the number of the plurality of dependent decision variables is smaller than the sampling-time variable upper limit value, the approximate problem including all of the plurality of dependent decision variables included in the dependent problem as two or more residual decision variables.

7. The problem solving apparatus according to any one of claims 3 to 6, wherein
in the decision variable replacement table, entries including a serial number, a replacement-source decision variable, and a replacement value are registered,
the serial number represents an order of the entries and does not overlap with others of the entries,
the replacement-source decision variable identifies any of the plurality of decision variables and does not overlap with others of the entries,
the replacement value represents the first value, the second value, a previously determined decision variable multiplied by a non-inverted sign without inverting a sign, or a previously determined decision variable multiplied by an inverted sign that inverts a sign, and
the previously determined decision variable represents the replacement-source decision variable included in the entry having a later serial number.

8. The problem solving apparatus according to claim 7, wherein
the table update unit
calculates an average value for each of the two or more residual decision variables based on a plurality of solutions to the approximate problem, and calculates an evaluation value according to the calculated average value,
calculates a correlation value representing a correlation for each of a plurality of variable sets included in the two or more residual decision variables based on a plurality of solutions to the approximate problem, and calculates the evaluation value corresponding to the calculated correlation value,
each of the plurality of variable sets being a set of two different residual decision variables,
stores a plurality of elements in a priority queue,
each of the plurality of elements including any of the two or more residual decision variables or any of the plurality of variable sets together with the evaluation value,
newly registers the entry corresponding to one head element having the largest evaluation value among the plurality of elements stored in the priority queue, in the decision variable replacement table on condition of not overlapping with the already registered entry,
the entry corresponding to the head element to be newly registered including the serial number representing later than the entry already registered in the decision variable replacement table,
deletes the head element from the priority queue, and
repeats a process of newly registering the entry corresponding to the head element in the priority queue, in the decision variable replacement table and a process of deleting the head element from the priority queue on condition of not overlapping with the already registered entry until an end condition is reached,
the end condition being that the priority queue becomes empty, the number of newly registered entries is larger than a predetermined variable replacement lower limit value, or the evaluation value of the head element is smaller than a predetermined replacement threshold.

9. The problem solving apparatus according to claim 8, wherein
when any target residual decision variable among the two or more residual decision variables is included in the head element,
the table update unit
newly registers a first entry as the entry in the decision variable replacement table and deletes the head element from the priority queue when the target residual decision variable does not overlap with any of the replacement-source decision variables included in the decision variable replacement table,
the first entry
including the target residual decision variable as the replacement-source decision variable, and
including a value obtained by binarizing the average value for the target residual decision variables to the first value or the second value as the replacement value.

10. The problem solving apparatus according to claim 9, wherein
when the target residual decision variable overlaps with any of the replacement-source decision variables included in the decision variable replacement table,
the table update unit deletes the head element from the priority queue without newly registering the entry in the decision variable replacement table.

11. The problem solving apparatus according to claim 8, wherein
when any target variable set among the plurality of variable sets is included in the head element,
the target variable set representing a set of a first residual decision variable and a second residual decision variable among the two or more residual decision variables,
the table update unit
when the first residual decision variable does not overlap with any of the replacement-source decision variables included in the decision variable replacement table and the second residual decision variable does not overlap with any of the replacement-source decision variables included in the decision variable replacement table, newly registers a second entry as the entry in the decision variable replacement table and deletes the head element from the priority queue,
the second entry
including the first residual decision variable as the replacement-source decision variable, and
including, as the replacement value, the second residual decision variable multiplied by a sign obtained by encoding the correlation value for the target variable set into the non-inverted sign or the inverted sign.

12. The problem solving apparatus according to claim 11, wherein
the table update unit
when the first residual decision variable does not overlap with any of the replacement-source decision variables included in the decision variable replacement table and the second residual decision variable overlaps with any of the replacement-source decision variables included in the decision variable replacement table, newly registers a third entry as the entry in the decision variable replacement table and deletes the head element from the priority queue,
the third entry
including the first residual decision variable as the replacement-source decision variable, and
including a first arithmetic value as the replacement value, and
the first calculated value being a value obtained by multiplying the replacement value included in the entry including the second residual decision variable in the decision variable replacement table as the replacement-source decision variable by a sign obtained by encoding the correlation value for the target variable set into the non-inverted sign or the inverted sign.

13. The problem solving apparatus according to claim 12, wherein
the table update unit
when the first residual decision variable overlaps with any of the replacement-source decision variables included in the decision variable replacement table, and the second residual decision variable overlaps with any of the replacement-source decision variables included in the decision variable replacement table,
deletes the head element from the priority queue without newly registering the entry in the decision variable replacement table.

14. The problem solving apparatus according to claim 7, wherein
the solution output unit
traces the entries included in the decision variable replacement table in reverse order of the serial numbers from the end to the head of the serial numbers, and determines the replacement-source decision variable among the plurality of decision variables based on the replacement value, and
outputs, as a solution to the master problem, a value of each of the plurality of decision variables that is determined.

15. The problem solving apparatus according to claim 14, wherein
for each of the plurality of decision variables, the solution output unit
when the replacement value is the first value, sets a value of a corresponding decision variable as the first value,
when the replacement value is the second value, sets a value of the corresponding decision variable as the second value,
when the replacement value is the previously determined decision variable multiplied by the non-inverted sign, sets a value of the corresponding decision variable as a value determined for the previously determined decision variable, and
when the replacement value is the previously determined decision variable multiplied by the inverted sign, sets a value of the corresponding decision variable as a value obtained by inverting a value determined for the previously determined decision variable.

16. The problem solving apparatus according to claim 1, further comprising
a solution acquiring unit that provides the approximate problem to a sampler that solves a linearly constrained quadratic minimization problem and acquires a plurality of solutions to the approximate problem from the sampler.

17. The problem solving apparatus according to claim 1, wherein
the dependent problem generating unit generates the dependent problem in response to acquisition of the master problem when a value of any decision variable of the plurality of decision variables is not registered in the decision variable replacement table.

18. A problem solving method comprising:
acquiring, by an information processing device, a master problem of minimizing an objective function including a plurality of decision variables under a constraint condition or without a constraint condition;
generating, by the information processing device, a dependent problem including, as a plurality of dependent decision variables, two or more decision variables that are not registered as determined in a decision variable replacement table among the plurality of decision variables, in response to execution of new registration processing of newly registering a value of any decision variable among the plurality of decision variables in the decision variable replacement table in which a value of a determined decision variable among the plurality of decision variables is registered;
generating, by the information processing device, every time the dependent problem is generated, an approximate problem including a part or all of two or more dependent decision variables as two or more residual decision variables in descending order from a larger influence among the plurality of dependent decision variables;
executing, by the information processing device, the new registration processing of determining a value by performing statistical processing for each of the two or more residual decision variables based on a plurality of solutions to the approximate problem, and newly registering, in the decision variable replacement table, the value determined by performing the statistical processing for each of one or more decision variables corresponding to a part or all of the two or more residual decision variables; and
outputting, by the information processing device, a solution to the master problem based on all values of the plurality of decision variables registered in the decision variable replacement table when all values of the plurality of decision variables included in the master problem are registered in the decision variable replacement table.

19. A program for causing an information processing device to function as a problem solving apparatus, wherein
the program causes the information processing device to function as:
a problem acquiring unit that acquires a master problem of minimizing an objective function including a plurality of decision variables under a constraint condition or without a constraint condition;
a dependent problem generating unit that generates a dependent problem including, as a plurality of dependent decision variables, two or more decision variables that are not registered as determined in a decision variable replacement table among the plurality of decision variables, in response to execution of new registration processing of newly registering a value of any decision variable among the plurality of decision variables in the decision variable replacement table in which a value of a determined decision variable among the plurality of decision variables is registered;
an approximate problem generating unit that generates, every time the dependent problem is generated, an approximate problem including a part or all of two or more dependent decision variables as two or more residual decision variables in descending order from a larger influence among the plurality of dependent decision variables;
a table update unit that executes the new registration processing of determining a value by performing statistical processing for each of the two or more residual decision variables based on a plurality of solutions to the approximate problem, and newly registering, in the decision variable replacement table, the value determined by performing the statistical processing for each of one or more decision variables corresponding to a part or all of the two or more residual decision variables; and
a solution output unit that outputs a solution to the master problem based on all values of the plurality of decision variables registered in the decision variable replacement table when all values of the plurality of decision variables included in the master problem are registered in the decision variable replacement table.
